(19) Europäisches Patentamt
European Patent Office
Office européen des brevets

(11) Publication number: 0 216 909 B1

(12) EUROPEAN PATENT SPECIFICATION

(45) Date of publication of the patent specification: 28.02.90

(51) Int. Cl.[5]: C 10 M 141/12, C 10 M 141/10, C 10 M 135/02, C 10 M 135/36, C 10 M 137/10, C 10 M 139/00

(21) Application number: 86902655.9

(22) Date of filing: 04.04.86

(86) International application number: PCT/US 86/00682

(87) International publication number: WO 86/06092 (23.10.86 Gazette 86/23)

# (54) LUBRICATING OILS COMPRISING BORON- AND SULFUR-CONTAINING COMPOSITIONS, AND THEIR METHOD OF PREPARATION.

(30) Priority: 08.04.85 US 720665

(43) Date of publication of application: 08.04.87 Bulletin 87/15

(45) Publication of the grant of the patent: 28.02.90 Bulletin 90/09

(84) Designated Contracting States: AT BE CH DE FR GB IT LI NL SE

(56) References cited:
FR-A-1 543 830
FR-A-2 277 883
FR-A-2 520 363
GB-A-1 474 048
US-A-3 632 566

(73) Proprietor: The Lubrizol Corporation
29400 Lakeland Boulevard
Wickliffe, Ohio 44092 (US)

(72) Inventor: DAVIS, Kirk, E.
2105 Aberdeen Drive
Euclid, OH 44143 (US)
Inventor: DIBIASE, Stephen, A.
504 East 266th Street
Euclid, OH 44132 (US)
Inventor: O CONNOR, Brian, M.
36791 Freemont Road
South Euclid Ohio 44121 (US)

(74) Representative: Crisp, David Norman
D. YOUNG & CO. 10 Staple Inn
London, WC1V 7RD (GB)



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convension).

LIBERGRAF, STOCKHOLM 1990

## Description

This invention relates to lubricating oil compositions containing boron- and sulfur-containing compositions which are oil-soluble.

Various compositions prepared by the sulfurization of organic compounds and more particularly olefins and olefin-containing compounds are known in the art, as are lubricants containing these products. Typical sulfurized compositions prepared by reacting olefins such as isobutene, diisobutene, and triisobutene with sulfur under various conditions are described in, for example, *Chemical Reviews*, 65, 237 (1965). Other references describe the reaction of such olefins with hydrogen sulfide and elemental sulfur to form predominantly mercaptans with sulfides, disulfides and higher polysulfides also being formed as by-products. Reference is made to J. Am. Chem. Soc., 60, 2452 (1938), and U.S. Patents 3 221 056, 3 419 614 and 4 191 659. U.S. Patent 3 419 614 describes a process for increasing the yield of mercaptan by carrying out the reaction of olefin with hydrogen sulfide and sulfur at a high temperature in the presence of various basic materials. U.S. Patent 4 191 659 describes the preparation of sulfurized compositions by reaction at superatmospheric pressure of olefins with a mixture of sulfur and hydrogen sulfide in the presence of a catalyst followed by treatment with an alkali metal sulfide. The use of sulfurized natural and synthetic oils as additives in lubricating compositions has been suggested in the art such as in, for example, U.S. Patents 2 299 813 and 4 360 438.

It also has been known that Diels-Alder adducts can be sulfurized to form sulfur-containing compositions which are particularly useful as extreme pressure and anti-wear additives in various lubricating oils. U.S. Patents 3 632 566 and Reissue 27 331 describe such sulfurized Diels-Alder adducts and lubricants containing said adducts. In these patents, the ratio of sulfur to Diels-Alder adduct is described as being a molar ratio of from about 0.5 : 1.0 to 10.0 : 1.0. The patents indicate that it is normally desirable to incorporate as much stable sulfur into the compound as possible, and therefore, a molar excess of sulfur normally is employed. The disclosed lubricating compositions may contain other additives normally used to improve the properties of lubricating compositions such as dispersants, detergents, extreme pressure agents, and additional oxidation and corrosion-inhibiting agents, etc. For some lubricant applications, however, the above-described sulfur-containing compositions have not been entirely adequate as multi-purpose additives.

Organophosphorus and metal organophosphorus compounds are used extensively in lubricating oils as extreme pressure agents and anti-wear agents. Examples of such compounds include: phosphosulfurized hydrocarbons such as the reaction product of a phosphorus sulfide with turpentine; phosphorus esters including dihydrocarbon and trihydrocarbon phosphites; and metal phosphorodithioates such as zinc dialkylphosphorodithioates. Because of the toxicological problems associated with the use of organophosphorus compounds, and particularly with the metal dialkylphosphorodithioates, there is a need to develop lubricant compositions containing low levels of phosphorus yet characterized as having acceptable oxidation inhibition and anti-wear properties. Lubricants containing low levels of phosphorus also are desirable in view of the tendency of phosphorus to poison catalytic converters used to control emissions from gasoline engines.

Organic boron compounds have been utilized as additives in lubricating oils useful as gear lubricants and as transmission fluids such as automatic transmission fluids. In U.S. Patent 3 125 528, a lubricating composition is described which is useful in automotive vehicles having a transaxle unit comprising rear axle hypoid gears and a hydraulic transmission. The lubricating oil contains organic boron compounds, and various boron compounds are described in the patent. Examples of useful borates include tri-phenyl borate, tri-propyl borate, tri-cyclohexyl borate. The preferred borate compounds are tri-n-propyl borate, tri-benzyl borate and the tri-cresyl borates. The organic boron compounds are reported to impart extreme pressure properties required for differential rear axle gear lubrication.

U.S. Patent 3 711 412 describes hydraulic fluids comprising from 20 to 96 % by weight of at least one tri-borate ester of glycol mono-ethers (as base fluid) and from 2 to 40 % of a bis(glycol ether) formal. It is suggested that the crude borate esters prepared and used in the patent contain some metaborate of the glycol ether.

Esters obtained from acyclic polyols with metaboric acid are described in U.S. Patent 2 866 811 as being useful in liquid hydrocarbons such asasoline, fuels, kerosene, lubricating oils, etc. The borate esters described in this '811 patent are prepared by reacting metaboric acid with an acyclic polyol containing from 3 to 10 carbon atoms and from 2 to 3 hydroxyl groups wherein each of said hydroxyl groups are separated from the neighboring hydroxyl group from 3 to 6 carbon atoms and up to one nitrogen atom. Specific examples of such acyclic polyols include 2-methyl-2,4-pentanediol, ethylene glycol, triethanol amine, etc.

Borated alkoxylated alcohols and their use in lubricants and liquid fuels are described in U.S. Patent 4 440 656. The additives are made by reacting an alkoxylated alcohol with a boron-containing compound such as boric acid or trialkyl borate. The borated compounds described in this patent are reported as providing friction reducing or anti-wear properties to lubricants and fuels.

U.S. Patent 3 030 196 describes a process for treating hydrocarbon fuels with boron esters. Esters of metaboric acid are added to liquid hydrocarbons. The metaboric acids include those represented by the following formulae: HOBO, HOBS, HSBO and HSBS. With most of the hydrocarbons amenable to treatment, a flocculant precipitate is formed as the metaborate ester is added. The precipitate is separated from the hydrocarbon. Examples of the esters of metaboric acid described in the patent include, benzyl metaborate, n-butyl metaborate, cyclohexyl metaborate and ethyl metaborate.

British Patent No 1 474 048 describes a composition comprising a major proportion by weight of a lubricating oil or a fuel oil, a minor proportion by weight of an ester or ortho boric acid and ether alcohol, and a minor proportion by weight of an ashless dispersant. Three possible esters of orthoboric acid are mentioned in this document, namely orthoborate esters $(RO)_3B$, pyroborate esters $(RO)_2B-O-B(OR)_2$ and metaborate esters

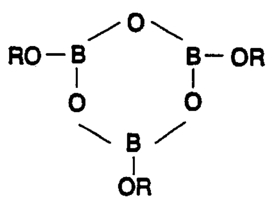

in which at least one of the R groups is a hydrogen and carbon-containing group also containing an ether linkage.

In accordance with the present invention, there is provided a lubricating oil composition comprising:

a major amount of an oil of lubricating viscosity and a minor amount of an oil-soluble composition comprising a mixture of:

(A) an ester of metaboric acid having the general formula:

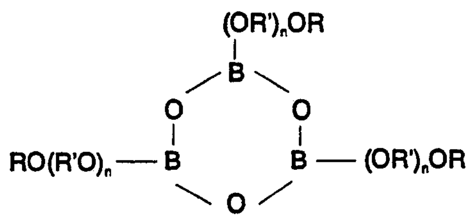

(I)

wherein

R is independently a hydrogen or hydrocarbyl group containing from 1 to 18 carbon atoms, R in one RO(R'O) group may be hydrogen when n = 0, or two of the R groups are hydrocarbylene groups joined together through a carbon, oxygen or nitrogen atom to form a ring;

each R' is independently an alkylene group containing from 2 to 4 carbon atoms;

and n is from 0 to 7; and

(B) an oil soluble sulfurized organic compound, wherein the amount of (A) and (B) is sufficient to provide a weight ratio of sulfur to boron of from 0.5 : 1 to 20 : 1.

The lubricating oil compositions of the invention are preferably based on synthetic lubricants and lubricants containing little or no phosphorus. The compositions may optionally contain (C) at least one auxiliary corrosion-inhibitor. The boron- and sulfur-containing compositions incorporated into the compositions of the invention serve as load-carrying agents, for example, in automotive and industrial gear oils and in motor oils.

The sulfurized organic compounds (B) generally are selected from aromatic, alkyl or alkenyl sulfides or polysulfides, sulfurized olefins, sulfurized carboxylic acid esters, sulfurized ester olefins, sulfurized oils, or mixtures thereof. Particular examples of the auxiliary corrosion-inhibitor (C) are the oil-soluble derivatives of dimercaptothiadiazoles. The compositions of the invention also may contain at least one oil-soluble dispersant or detergent. The oil-soluble compositions of the present invention are useful particularly in the lubricating oil formulations including synthetic oil formulations and in motor and gear oil formulations which contain little or no phosphorus.

Preferred features and embodiments of the invention are described below.

Component (A) of the oil-soluble compositions of the invention is at least one ester of metaboric acid having the general formula

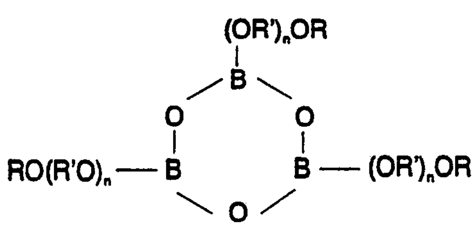

(I)

wherein

each R is independently a hydrogen or hydrocarbyl group containing from 1 to 18 carbon atoms, R in one $(OR')_nOR$ group may be hydrogen when n = 0, or two of the R groups are hydrocarbylene groups joined together through a carbon, oxygen or nitrogen atom to form a ring,

each R' is independently an alkylene group containing from about 2 to 4 carbon atoms, and
n is from 0 to 7.

More generally, all three R groups will be the same hydrocarbyl groups which may be aliphatic or aromatic groups containing from about 6 to 12 carbon atoms.

Boron compounds useful in the present invention such as represented by Formula I can be prepared by reacting a hydroxy-containing compound with orthoboric acid acid in a molar ratio of about 1 : 1 as represented by the equation

$3RO(R'O)_nH+3H_3BO_3$ —>

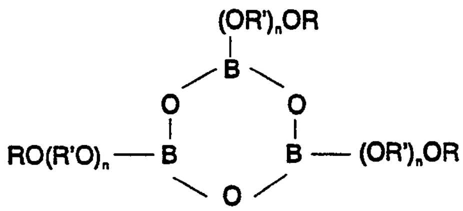

+ $6H_2O$

wherein R and R' are as defined above. When n is 0, the hydroxy-containing compounds are aliphatic or aromatic alcohols such as propanol, butanol, hexanol, octanol, decanol, dodecanol, hexadecanol, phenol, benzyl alcohol, etc. When n is a number from 1 to about 7, the hydroxy-containing compounds are ether alcohols or polyether alcohols such as $C_4H_9OC_2\text{-}H_5OH$, $C_8H_{17}OC_3H_7OH$, $C_{10}H_{21}OCH_2CHCHOH$, $C_8H_{17}OC_3H_7OC_3H_7OH$, $C_8H_{17}O\text{-}C_3H_7O\text{-}C_3H_7O\text{-}C_3H_7OH$, etc. Ether alcohols and polyether alcohols are available commercially and can be obtained, for example, by reacting an alcohol with an alkylene oxide such as ethylene oxide, propylene oxide, butylene oxide, etc.

In another preferred embodiment, the ester of metaboric acid (A) may be represented by the general formula

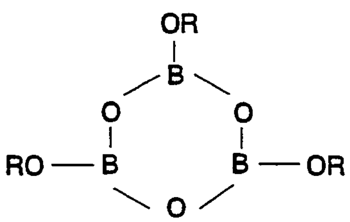

(II)

wherein each R is independently a hydrogen or hydrocarbyl group containing from 3 to 18 carbon atoms, and more preferably from about 6 to about 12 carbon atoms. The hydrocarbyl groups R in Formula II may be aliphatic or aromatic groups. Thus, the R group may be alkyl, aralkyl, cycloalkyl, aryl, alkaryl, hydroxy alkyl, alkoxy alkyl, poly(alkoxy)-alkyl, and aryloxy alkyl.

The esters of metaboric acid utilized in the compositions of this invention may be mixtures with other esters of other boric acids such as orthoborate esters. When diols are used in the preparation of the esters of metaboric acid, the two hydroxyl groups may react to form a ring as in Formula IIB or the two hydroxyl groups may result in a linear diester from two metaboric acid species. Mixtures of such diesters normally will be obtained. One of the advantages of using such mixtures is that they are easily prepared, and other esters of boric acid such as orthoborate esters may be formed as side products when the metaborate esters are prepared.

The esters of metaboric acid is represented by Formulae I and II above can be prepared by the reaction of a hydroxy-containing compound with orthoboric acid in a molar ratio of up to about 1 : 1 with the removal of water. An excess of the hydroxy-containing compound may be contained in the reaction mixture without deleterious effect since the formation of other esters of boric acid in small amounts will not adversely affect the utility of the desired ester of metaboric acid. The molar ratio may be as high as 1 : 2.

The esters of metaboric acid useful in the compositions of this invention generally are believed to exist as trimers having the following formulae

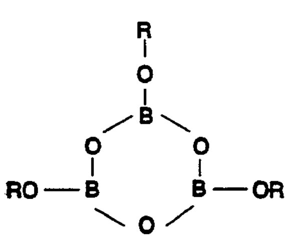

(IIA)

wherein R is as defined above.

As mentioned above, two of the R groups in any of the Formulae I or II may be hydrocarbylene groups joined together through a carbon, oxygen or nitrogen atom to form a ring. In such instances, the esters of the metaboric acids may be represented by the following Formula IIB

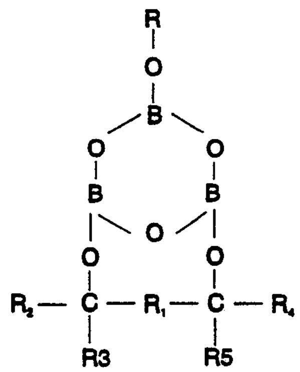

(IIB)

wherein $R_1$ is a nitrogen or oxygen atom or an alkylene group of from 1 to 4 carbon atoms and said alkylene group may contain one or more oxygen or nitrogen atom, and $R_2$ to $R_5$ inclusive may be hydrogen or alkyl groups containing from 1 to 7 carbon atoms.

Metaborate esters of the type represented by Formula IIB can be prepared by methods known in the art such as by the reaction of an acyclic polyol and trimeric metaboric acid wherein the polyol generally contains from 3 to 10 carbon atoms and from 2 to 3 hydroxyl groups attached to the carbon atoms, each of the hydroxyl groups being separated from its neighboring hydroxyl groups by 3 to 6 carbon atoms and up to one nitrogen or oxygen atom. When the polyol is a diol, the metaboric esters formed are further characterized in that the non-cyclic oxygen atom of the metaboric acid which is free of an ester linkage with the diol is substituted with hydrogen, alkyl, cycloalkyl, aralkyl, aryl, alkaryl, alkoxy alkyl, polyalkoxy alkyl, or aryloxy alkyl group. In another embodiment, the non-cyclic oxygen atom of the metaboric acid which is free of an ester linkage with the diol is substituted with an alkylene, imonodialkylene, alkylidynetrialkylene or nitrilotrialkylene group. Such procedures are known in the art such as in U.S. Patent 2 866 811.

In general, the esters of the type represented by Formula IIB are prepared by esterifying metaboric acid with the appropriate acyclic diol or triol. Metaboric acid is prepared by dehydrating orthoboric acid by heating the same in the presence of an azeotroping solvent such as benzene, toluene, xylene or the like. The mixture of orthoboric acid and the azeotroping solvent is heated to its boiling temperature such as from about 75° to about 150°C.

The diesters are formed when the appropriate acyclic diol is introduced into the mixture of metaboric acid and the azeotroping solvent in which it was formed. In this esterification reaction, one mole of the diol is used for each three moles of metaboric acid monomer present in the mixture. The resulting mixture then is refluxed and 1.5 molecular proportions of water are evolved thereby forming as an intermediate, 0.5 molecular proportion of the pyroborate ester of the diol used. On continued heating, an additional 0.5 molecular proportion of water is evolved thereby forming the diester as represented by Formula IIB.

In another embodiment, the acyclic polyol reacted with the metaboric acid will contain oxygen or nitrogen atoms in the alkylene group $R_1$ of Formula IIB. Thus, the acyclic polyol utilized in the formation of the esters of metaboric acid may be amino polyols or ether polyols. For example, the acylated polyol may be diethanolamine, triethanolamine, dipropenolamine, diisopropanolamine, 2-hydroxyethyl ether, 3-hydroxypropyl ether, etc.

Specific examples of the metaborate diesters include 1,1,3-trimethyltrimethylene metaborate, 1,4-dimethyltetramethylene metaborate, 1-methyltrimethylene metaborate, iminodiethylene metaborate, propylidynetrimethylene metaborate, 1-ethyl-6-dimethyl hexamethylene metaborate; (beta-ethoxyethyl)-(1-ethyl-1,6-dimethyl hexamethylene) metaborate; (methyl)-(trimethylene) metaborate; (isopropyl)-(1-methyltrimethylene) metaborate; iminodiisopropylene metaborate; (phenyl)-(iminodiisopropylene) metaborate; propylene-bis-(trimethylene metaborate); (decyl)-(1-methyltrimethylene) metaborate; iminodiethylene-bis-(2,3-dimethyltetramethylene metaborate); nitrilotripropylene-tris-(1,1,3-trimethylene metaborate); nitrilotriisopropylene metaborate; butylidynetriethylene metaborate; 1,4,7-heptamethylene metaborate; butylene-bis-(iminodiethylene metaborate), and the like.

Specific examples of the preparation of esters of metaboric acid which are useful in the compositions of the present invention are illustrated by the following examples. Unless otherwise indicated in these examples and elsewhere in the specification and claims, all parts and percentages are by weight, and temperatures are in degrees centigrade.

**Example A-1**

A mixture of 400 parts (2.5 moles) of iso-decyl alcohol and 158 parts (2.5 moles) of boric acid is prepared with stirring and maintained in a nitrogen atmosphere while heating at a temperature of 200°C over a period of from 6 to 9 hours.

Water is removed as the temperature is increased. The reaction mixture then is vacuum stripped to 200°C under 20 mm Hg. pressure. A total of 903 parts (theory 918 parts) of water is removed. After cooling the reaction mixture to 100°C, it is filtered through a filter aid, and the filtrate is the desired product containing 6.12 % boron (theory, 5.9 %).

**Example A-2**

A mixture of 484 parts (2 moles) of cetyl alcohol and 124 parts (2 moles) of boric acid is prepared with stirring in a nitrogen atmosphere. The mixture is heated to a temperature of up to about 205°C while removing water, and the mixture then is cooled to 100°C and filtered through a filter aid. The filtrate is the desired product containing 3. 89 % boron (theory, 4.10 %).

**Example A-3**

A mixture of 88 parts of neopentylglycol (1 mole), 314 parts of decyl alcohol (2 moles), and 248 parts of boric acid (4 moles) is prepared with stirring in a nitrogen atmosphere. The reaction mixture then is heated to a temperature of about 190°C over 3.5 hours while removing water. After cooling to room temperature, the reaction mixture is a hazy white liquid. An additional 16 parts of neopentylglycol is added and the mixture is again heated to a temperature of up to about 205°C over 6.5 hours with the removal of additional water. The reaction mixture then is vacuum stripped to 160°C/20 mm Hg. over two hours. The mixture is cooled to 90°C and filtered through filter aid. The filtrate is a yellow syrupy liquid containing 7.79 % boron (theory, 8.43).

**Example A-4**

The procedure of Example A-1 is repeated except that the molar ratio of decyl alcohol to boric acid is 1.5 : 1. The product contains 3.7 % boron (theory, 4.2 %).

**Example A-5**

The procedure of Example A-2 is repeated except that the molar ratio of cetyl alcohol to boric acid is 1.5 : 1. The product obtained in this manner contains 3.1 % boron (theory, 2.8 %).

**Example A-6**

The procedure of Example A-2 is repeated except that the molar ratio of cetyl alcohol to boric acid is 2 : 1. The product obtained in this manner contains 2.2 % boron (theory, 2.2 %).

**Example A-7**

A mixture of 61.8 parts of boric acid is refluxed in 200 parts of toluene while removing water and forming metaboric acid. Subsequently, 39.4 parts of 2-methyl-2,4-pentanediol is added with stirring to the refluxing mixture, and 12 parts of water is removed as an azeotrope. The mixture is filtered, and the filtrate is the desired product, namely, 1,1,3-trimethyltrimethylene metaborate.

**Example A-8**

The procedure of Example A-7 is repeated except that 39.4 parts of 2,5-hexanediol is used in place of the 2-methyl-2,4-pentanediol. The product is primarily 1,4-dimethyltetramethylene metaborate.

**Example A-9**

The procedure of Example A-7 is repeated except that 35 parts of diethanolamine is used in lieu of the pentanediol. The product obtained in this manner is imminodiethylene metaborate.

**Example A-10**

The procedure of Example A-7 is repeated except the that the diol is replaced by an equivalent amount of 2-hydroxyethylether.

Component (B) of the oil-soluble compositions of the present invention comprises at least one oil-soluble sulfurized organic compound. A wide variety of sulfurized organic compounds can be utilized as component (B) in the compositions of the present invention, and these compounds may generally be represented by the formula

$RS_xR_1$ (III)

wherein S represents sulfur, x is a whole number having a value of from 1 to about 10, and R and $R_1$ may be the same or different organic groups. The organic groups may be hydrocarbon groups or substituted hydrocarbon groups containing alkyl, aryl, aralkyl, alkaryl, alkanoate, thiazole, imidazole, phosphorothionate, beta-ketoalkyl groups, etc. The substantially hydrocarbon groups may contain other substituents such ashalogen, amino, hydroxyl, mercapto, alkoxy, aryloxy, thio, nitro, sulfonic acid, carboxylic acid, carboxylic acid ester, etc.

Specific examples of types of sulfurized compositions which are useful as component (B) in the compositions of this invention include aromatic, alkyl or alkenyl sulfides and polysulfides, sulfurized olefins, sulfurized carboxylic acid esters, sulfurized ester olefins, sulfurized oil, and mixtures thereof. The preparation of such oil-soluble sulfurized compositions is described in the art.

The sulfurized organic compounds utilized in the present invention may be aromatic and alkyl sulfides such as dibenzyl sulfide, dixylyl sulfide, dicetyl sulfide, diparaffin wax sulfide and polysulfide, cracked wax oleum sulfides, etc. One method of preparing the aromatic and alkyl sulfides includes the condensation of a chlorinated hydrocarbon with an inorganic sulfide whereby the chlorine atom from each of two molecules is displaced, and the free valence from each molecule is joined to a divalent sulfur atom. Generally, the reaction is conducted in the presence of elemental sulfur.

Examples of dialkenyl sulfides which are useful in the compositions of the present invention are described in U.S. Patent 2 446 072. These sulfides can be prepared by interacting an olefinic hydrocarbon containing from 3 to 12 carbon atoms with elemental sulfur in the presence of zinc or a similar metal generally in the form of an acid salt. Examples of sulfides of this type include 6,6'-dithio-bis(5-methyl-4-nonene), 2-butenyl monosulfide and disulfide, and 2-methyl-2-butenyl monosulfide and disulfide.

The sulfurized olefins which are useful as component (B) in the compositions of the present invention include sulfurized olefins prepared by the reaction of an olefin (preferably containing 3 to 6 carbon atoms) or a lower molecular weight polyolefin derived therefrom, with a sulfur-containing compound such as sulfur, sulfur monochloride and/or sulfur dichloride, hydrogen sulfide, etc.

The sulfurized organic compounds utilized in the compositions of the present invention may be sulfurized oils which may be prepared by treating natural or synthetic oils including mineral oils, lard oil, carboxylic acid esters derived from aliphatic alcohols and fatty acids or aliphatic carboxylic acids (e.g., myristyl oleate and oleyl oleate) sperm whale oil and synthetic sperm whale oil substitutes and synthetic unsaturated esters or glycerides. Stable sulfurized mineral lubricating oils can be obtained by heating a suitable mineral lubricating oil with from about 1 to about 5 % of sulfur at a temperature above about 175°C and preferably at about 200° to about 260°C for several hours so as to obtain a reaction product which is substantially non-corrosive to copper. The mineral lubricating oils sulfurized in this manner may be distillate or residual oils obtained from paraffinic, naphthenic or mixed base crudes. Similarly, sulfurized fatty oils such as a sulfurized lard oil can be obtained by heating lard oil with about 10 to 15 % of sulfur at a temperature of about 150°C for a time sufficient to obtain a homogeneous product.

The sulfurized fatty acid esters which are useful in the compositions of this invention can be prepared by reacting sulfur, sulfur monochloride, and/or sulfur dichloride with an unsaturated fatty ester at elevated temperatures. Typical esters include $C_1$-$C_{20}$ alkyl esters of $C_8$-$C_{24}$ unsaturated fatty acids such as palmitoleic oleic, ricinoleic, petroselic, vaccenic, linoleic, linolenic, oleostearic, licanic, etc. Sulfurized fatty acid esters prepared from mixed unsaturated fatty acid esters such as are obtained from animal fats and vegetable oils such as tall oil, linseed oil, olive oil, castor oil, peanut oil, rape oil, fish oil, sperm oil, etc also are useful. Specific examples of the fatty esters which can be sulfurized include lauryl talate, methyl oleate, ethyl oleate, lauryl oleate, cetyl oleate, cetyl linoleate, lauryl ricinoleate, oleolinoleate, oleostearate, and alkyl glycerides.

Another class of organic sulfur-containing compounds which can be used as component (B) in the compositions of the present invention includes sulfurized aliphatic esters of an olefinic monodicarboxylic acid. For example, aliphatic alcohols of from 1 to 30 carbon atoms can be used to esterify monocarboxylic acids such as acrylic acid, methacrylic acid, 2,4-pentadienic acid, etc. or fumaric acid, maleic acid, muconic acid, etc. Sulfurization of these esters is conducted with elemental sulfur, sulfur monochloride and/or sulfur dichloride.

Another class of sulfurized organic compounds can be utilized in the compositions of the invention are diestersulfides characterized by the following general formula

$-S_y[(CH_2)_xCOOR]_2$ (IIIA)

wherein x is from about 2 to about 5; y is from 1 to about 6, preferably 1 to about 3; and R is an alkyl group having from about 4 to about 20 carbon atoms. The R group may be a straight chain or branched chain group that is large enough to maintain the solubility of the compositions of the invention in oil. Typical diesters include the butyl, amyl, hexyl, heptyl, octyl, nonyl, decyl, tridecyl, myristyl, pentadecyl, cetyl, heptadecyl, stearyl, lauryl, and eicosyl diesters of

thiodialkanoic acids such as propionic, butanoic, pentanoic and hexanoic acids. Of the diester sulfides, a specific example is dilauryl, 3,3'-thiodipropionate.

In one preferred embodiment, the sulfurized organic compound utilized in the compositions of the present invention comprise sulfurized olefins. For example, organic polysulfides may be prepared by the sulfochlorination of olefins containing four or more carbon atoms and further treatment with inorganic higher polysulfides according to U.S. Patent 2 708 199.

In one embodiment, sulfurized olefins are produced by (1) reacting sulfur monochloride with a stoichiometric excess of a low carbon atom olefin, (2) treating the resulting product with an alkali metal sulfide in the presence of free sulfur in a mole ratio of no less than 2 : 1 in an alcohol-water solvent, and (3) reacting that product with an inorganic base. This procedure is described in U.S. Patent 3 471 404, and the disclosure of U.S. Patent 3 471 404 is hereby incorporated by reference for its discussion of this procedure for preparing sulfurized olefins and the sulfurized olefins thus produced. Generally, the olefin reactant contains from about 2 to 5 carbon atoms and examples include ethylene, propylene, butylene, isobutylene, amylene, etc. Briefly, in the first step, sulfur monochloride is reacted with from one to two moles of the olefin per mole of the sulfur monochloride, and the reaction is conducted by mixing the reactants at a temperature of from about 20 to 80°C. In the second step, the product of the first step is reacted with an alkali metal, preferably sodium sulfide, and sulfur. The mixture consists of up to about 2.2 moles of the metal sulfide per gramatom of sulfur, and the mole ratio of alkali metal sulfide to the product of the first step is about 0.8 to about 1.2 moles of metal sulfide per mole of step (1) product. Generally, the second step is conducted in the presence of an alcohol or an alcohol-water solvent under reflux conditions. The third step of the process is the reaction between the phosphosulfurized olefin which contains from about 1 to about 3 % of chlorine with an inorganic base in a water solution. Alkali metal hydroxide such as sodium hydroxide may be used. The reaction is continued until the chlorine content is reduced to below 0.5 %, and this reaction is conducted at under reflux conditions for a period of from about 1 to 24 hours.

The sulfurized olefins which are useful in the compositions of the present invention also may be prepared by the reaction, under superatmospheric pressure, of olefinic compounds with a mixture of sulfur and hydrogen sulfide in the presence of a catalyst, followed by removal of low boiling materials. This procedure for preparing sulfurized compositions which are useful in the present invention is described in U.S. Patent 4 191 659, the disclosure of which is hereby incorporated by reference for its description of the preparation of useful sulfurized compositions. An optional final step described in this patent is the removal of active sulfur by, for example, treatment with an alkali metal sulfide.

The olefinic compounds which may be sulfurized by this method and used in the compositions of this invention are diverse in nature. They contain at least one olefinic double bond, which is defined as a non-aromatic double bond; that is, one connecting two aliphatic carbon atoms. In its broadest sense, the olefin may be defined by the formula

$$R^1R^2C = CR^3R^4 \qquad (IV)$$

wherein each of $R^1$, $R^2$, $R^3$ and $R^4$ is hydrogen or an organic group. In general, the R values in the above formula which are not hydrogen may be satisfied by such groups as $-C(R^5)_3$, $-COOR^5$, $-CON(R^5)_2$, $-COON(R^5)_4$, -COOM, -CN, -X, $-YR^5$ or -Ar, wherein:

each $R^5$ is independently hydrogen, alkyl, alkenyl, aryl, substituted alkyl, substituted alkenyl or substituted aryl, with the proviso that any two $R^5$ groups can be alkylene or substituted alkylene whereby a ring of up to about 12 carbon atoms is formed;

M is one equivalent of a metal cation (preferably Group I or II, e.g., sodium, potassium, barium, calcium);

X is halogen (e.g., chloro, bromo, or iodo);

Y is oxygen or divalent sulfur;

Ar is an aryl or substituted aryl group of up to about 12 carbon atoms.

Any two of $R^1$, $R^2$, $R^3$ and $R^4$ may also together form an alkylene or substituted alkylene group; i.e., the olefinic compound may be alicyclic.

The natures of the substituents in the substituted moieties described above are not normally critical and any such substituent is useful so long as it is or can be made compatible with lubricating environments and does not interfere under the contemplated reaction conditions. Thus, substituted compounds which are so unstable as to deleteriously decompose under the reaction conditions employed are not contemplated. However, certain substituents such as keto or aldehydo can desirably undergo sulfurization. The selection of suitable substituents is within the skill of the art or may be established through routine testing. Typical of such substituents include any of the above-listed moieties as well as hydroxy, amidine, amino, sulfonyl, sulfinyl, sulfonate, nitro, phosphate, phosphite, alkali metal mercapto and the like.

The olefinic compound is usually one in which each R value which is not hydrogen is independently alkyl, alkenyl or aryl, or (less often) a corresponding substituted group. Monoolefinic and diolefinic compounds, particularly the former, are preferred, and especially terminal monoolefinic hydrocarbons; that is, those compounds in which $R^3$ and $R^4$ are hydrogen and $R^1$ and $R^2$ are alkyl or aryl, especially alkyl (that is, the olefin is aliphatic). Olefinic compounds having about 3 to 30 and especially about 3 to 16 (most often less than 9) carbon atoms are particularly desirable.

Isobutene, propylene and their dimers, trimers and tetramers, and mixtures thereof are especially preferred

olefinic compounds. Of these compounds, isobutylene and diisobutylene are particularly desirable because of their availability and the particularly high sulfur-containing compositions which can be prepared therefrom.

Commercial sources of sulfur and hydrogen sulfide are normally used for the purpose of this sulfurization reaction, and impurities normally associated therewith may be present without adverse results. Thus, commercial diisobutene is believed to contain essentially two isomeric forms and this mixture is contemplated for use according to the present invention.

The amounts of sulfur and hydrogen sulfide per mole of olefinic compound are, respectively, about 0.3 - 3.0 gram-atoms and about 0.1 - 1.5 moles. The preferred ranges are about 0.5 - 2.0 gram-atoms and about 0.4 - 1.25 moles respectively. In batch operations, the reactants are introduced at levels to provide these ranges. In semi-continuous and continuous operations, they may be admixed at any ratio but on a mass balance basis, they are present so as to be consumed in amounts within these ratios. Thus, for example, if the reaction vessel is initially charged with sulfur alone, the olefinic compound and hydrogen sulfide are added incrementally at a rate such that the desired ratio is obtained.

The temperature range in which the sulfurization reaction is carried out is generally about 50° - 350°C. The preferred range is about 100° - 200°C, with about 125° - 180°C being especially suitable. The reaction is conducted under superatmospheric pressure; this may be and usually is autogenous pressure (i.e., the pressure which naturally develops during the course of the reaction) but may also be externally applied pressure. The exact pressure developed during the reaction is dependent upon such factors as the design and operation of the system, the reaction temperature, and the vapor pressure of the reactants and products and it may vary during the course of the reaction.

It is frequently advantageous to incorporate materials useful as sulfurization catalysts in the reaction mixture. These materials may be acidic, basic or neutral. Useful neutral and acidic materials include acidified clays such as "Super Filtrol", p-toluenesulfonic acid, dialkylphosphorodithioic acids, and phosphorus sulfides such as phosphorus pentasulfide.

The preferred catalysts are basic materials. These may be inorganic oxides and salts such as sodium hydroxide, calcium oxide and sodium sulfide. The most desirable basic catalysts, however, are nitrogen bases including ammonia and amines. The amines include primary, secondary and tertiary hydrocarbyl amines wherein the hydrocarbyl radicals are alkyl, aryl, aralkyl, alkaryl or the like and contain about 1 - 20 carbon atoms. Suitable amines include aniline, benzylamine, dibenzylamine, dodecylamine, naphthylamine, tallow amines, N-ethyldipropylamine, N-phenylbenzylamine, N,N-diethylbutylamine, m-toluidine and 2,3-xylidine. Also useful are heterocyclic amines such as pyrrolidine, N-methylpyrrolidine, piperidine, pyridine and quinoline.

The preferred basic catalysts include ammonia and primary, secondary, or tertiary alkylamines having about 1 to 8 carbon atoms in the alkyl radicals. Representative amines of this type are methylamine, dimethylamine, trimethylamine, ethylamine, diethylamine, triethylamine, di-n-butylamine, tri-n-butylamine, tri-sec-hexylamine and tri-n-octylamine. Mixtures of these amines can be used, as well as mixtures of ammonia and amines.

The amount of catalytic material used is generally about 0.05 - 2.0 % of the weight of the olefinic compound. In the case of the preferred ammonia and amine catalysts, about 0.0005 - 0.5 mole per mole of olefin is preferred, and about 0. 001 - 0.1 mole is especially desirable.

Also present in the reaction mixture may be water, either as a catalyst or as a diluent for one or more of the catalysts recited hereinabove. The amount of water, when present, is usually about 1 - 25 % by weight of the olefinic compound. The presence of water is, however, not essential and when certain types of reaction equipment are used it may be advantageous to conduct the reaction under substantially anhydrous conditions.

The method is usually carried out in the absence of solvents and diluents other than water. However, it may sometimes be desirable to use a substantially inert, normally liquid organic diluent in the reaction. The nature of suitable diluents will readily be apparent to those skilled in the art.

The time required for the reaction to be completed will vary depending on the reagents, ratios thereof, the reaction temperature, the presence or absence of catalysts, and the purity of the reagents. The course of the reaction is conveniently followed by monitoring the pressure in the reaction vessel; the reaction can be considered complete when the pressure levels off to a constant value.

Following the preparation of the sulfurized mixture by the procedure described hereinabove, substantially all low boiling materials are removed. The nature of these low boiling materials will vary according to the amount and type of reactants used and the reaction conditions. It will also vary to some extent according to the use to which the sulfurized product is to be put, as well as such things as odor and flammability considerations, recycling needs of reactants and by-products, and the like. Most often, the product should have a flash point above about 30°C, preferably about 70°C and desirably above about 100°C as determined by ASTM Procedure D93. Reference is also made to ASTM Procedures D56 and D1310.

In addition to starting materials such as the olefinic compound, the low boiling materials will often include mercaptans and monosulfides, especially when the starting olefin contains less than 9 carbon atoms, and under these circumstances it is preferred that the product contain no more than about 5 % by weight of such starting materials, mercaptans and monosulfides. If these materials are gaseous at ambient pressure and temperature, they may be removed in part simply by venting the reaction vessel, and they may be recycled if desired. In the case of less volatile starting materials, it may be necessary to resort to such techniques as distillation at atmospheric pressure or vacuum distillation or stripping. Another useful method is the passage of an inert gas such as nitrogen through the mixture at a suitable temperature and pressure. Large-scale gas chromatography and molecular distillation may also be useful.

Any solids present in the reaction mixture may be conveniently removed, in most instances, by merely pouring off the liquid product. If further removal of solids is desired, such conventional techniques as filtration or centrifugation may be used.

A further optional step in the method of this invention is the treatment of the sulfurized product, obtained as described hereinabove, to reduce active sulfur. By "active sulfur" is meant sulfur in a form which can cause staining of copper and similar materials. When active sulfur is to be reduced, any of several methods known in the art may be employed. An illustrative method is treatment with an alkali metal sulfide as described in U.S. Patent 3 498 915.

Other optional treatments may be employed to improve such qualities as the odor, color and staining characteristics of the sulfurized compositions. These may include treatment with acidic clays such as Super Eiltrol and filtration through fuller's earth, activated charcoal, alumina clays or the like. Such treatments are often not required when a basic catalyst is employed.

The exact chemical nature of the sulfurized compositions prepared in this manner is not known with certainty, and it is most convenient to describe them in terms of the method for their preparation. It appears, however, that when prepared from olefins containing less than 9 and particularly less than 7 carbon atoms, they comprise principally disulfides, trisulfides and tetrasulfides. The sulfur content of these sulfurized compositions is usually about 2 - 60 % by weight, preferably about 25 - 60 % and most desirably about 40 - 50 %.

The method of preparing sulfurized olefins in this manner is illustrated by the following examples. Unless otherwise indicated in these and the other examples to follow, and in other parts of the specification and claims, all parts and percentages are by weight.

**Example B-1**

Sulfur (526 parts, 16.4 moles) is charged to a jacketed high pressure reactor which is fitted with an agitator and internal cooling coils. Refrigerated brine is circulated through the coils to cool the reactor prior to the introduction of the gaseous reactants. After sealing the reactor, evacuating to about 2 torr and cooling, 920 parts (16.4 moles) of isobutene and 279 parts (8.2 moles) of hydrogen sulfide are charged to the reactor. The reactor is heated using steam in the external jacket, to a temperature of about 182°C over about 1.5 hours. A maximum pressure of 1350 psig is reached at about 168°C during this heat-up. Prior to reaching the peak reaction temperature, the pressure starts to decrease and continues to decrease steadily as the gaseous reactants are consumed. After about 10 hours at a reaction temperature of about 182°C, the pressure is 310 - 340 psig and the rate of pressure change is about 5 - 10 psig per hour. The unreacted hydrogen sulfide and isobutene are vented to a recovery system. After the pressure in the reactor has decreased to atmospheric, the sulfurized mixture is recovered as a liquid.

The mixture is blown with nitrogen at about 100°C to remove low boiling materials including unreacted isobutene, mercaptans and monosulfides. The residue after nitrogen blowing is agitated with 5 % Super Filtrol and filtered, using a diatomaceous earth filter aid. The filtrate is the desired sulfurized composition which contains 42.5 % sulfur.

**Example B-2**

Sulfur (151 parts) are charged to a reactor similar to the one described in Example B-1. The sulfur is heated to 160°C and the reactor is sealed and evacuated. Hydrogen sulfide (72 parts) are added slowly to the reactor over a period of about 4.5 hours. Thereafter, 1.6 parts of the catalyst n-butylamine is added to the reactor after bout 3.8 parts of hydrogen sulfide is added. Isobutylene (157 parts) are added slowly to the reactor containing the sulfur, catalyst, and about 10 parts of hydrogen sulfide in such a manner that the rates of addition of isobutylene and hydrogen sulfide are such as to maintain 10 % molar excess of hydrogen sulfide until all the hydrogen sulfide is added. The addition of the remainder of isobutylene is continued until the entire 157 parts are added. The temperature is maintained in the range of between 160° - 171°C throughout the foregoing additions and reactions with occasional cooling being necessary. The reaction is held for 5 hours at 171°C, then unreacted hydrogen sulfide and isobutylene are vented to a recovery system until the pressure in the vessel is reduced to atmospheric. Separation of low boiling materials from the reaction crude is accomplished by nitrogen blowing, then vacuum stripping. The residue is then filtered. The filtrate is the desired sulfurized composition containing 47 % sulfur by weight.

In another preferred embodiment, the sulfurized organic compound (component (B)) is derived from a particular type of cyclic or bicyclic olefin which is a Diels-Alder adduct of at least one dienophile with at least one aliphatic conjugated diene. The sulfurized Diels-Alder adducts can be prepared by reacting various sulfurizing agents with the Diels-Alder adducts as described more fully below. Preferably, the sulfurizing agent is sulfur.

The Diels-Alder adducts are a well-known, art-recognized class of compounds prepared by the diene synthesis or Diels-Alder reaction. A summary of the prior art relating to this class of compounds is found in the Russian monograph, *Dienovyi Sintes*, Izdatelstwo Akademii Nauk SSSR, 1963 by A.S. Onischenko. (Translated into the English language by L. Mandel as A.S. Onischenko, *Diene Synthesis*, N.Y., Daniel Davey and Co., Inc., 1964.) This monograph and references cited therein are incorporated by reference into the present specification.

Basically, the diene synthesis (Diels-Alder reaction) involves the reaction of at least one conjugated diene,

>C=C-C=C<, with at least one ethylenically or acetylenically unsaturated compound, >C=C< or -C≡C-, these latter compounds being known as dienophiles. The reaction can be represented as follows:

**Reaction 1**

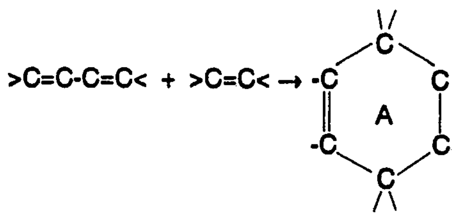

**Reaction 2**

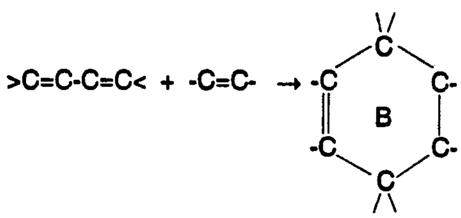

The products, A and B are commonly referred to as Diels-Alder adducts. It is these adducts which are used as starting materials for the preparation of the sulfurized Diels-Alder adducts utilized in the invention.

Representative examples of the 1,3-dienes include aliphatic and alicyclic conjugated diolefins or dienes of the formula

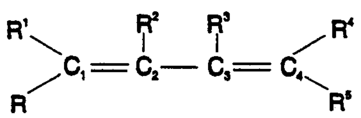

(V)

wherein R through $R^5$ are each independently selected from the group consisting of hydrogen, alkyl, halo, alkoxy, alkenyl, alkenyloxy, carboxy, cyano, amino, alkylamino, dialkylamino, phenyl, and phenyl- substituted with 1 to 3 substituents corresponding to R through $R^5$ with the proviso that a pair of R's on adjacent carbons do not form an additional double bond in the diene, or R, $R^2$, $R^3$ and $R^5$ are as defined and $R^1$ and $R^4$ are alkylene groups joined together to form a ring including the nitrogen atom. Preferably not more than three of the R variables are other than hydrogen and at least one is hydrogen. Normally the total carbon content of the diene will not exceed 20. In one preferred aspect of the invention, adducts are used where $R^2$ and $R^3$ are both hydrogen and at least one of the remaining R variables is also hydrogen. Preferably, the carbon content of these R variables when other than hydrogen is 7 or less. In this most preferred class, those dienes where R, $R^1$, $R^4$, and $R^5$ are hydrogen, chloro, or lower alkyl are especially useful. Specific examples of the R variables include the following groups: methyl, ethyl, phenyl, HOOC-, N≡C-, $CH_3O$-, $CH_3COO$-, $CH_3CH_2O$-, $CH_3C(O)$ -, HC(O)-, Cl, Br, tert-butyl, $CF_3$, tolyl, etc. Piperylene, isoprene, methylisoprene, chloroprene, and 1,3-butadiene are among the preferred dienes for use in preparing the Diels-Alder adducts.

In addition to these linear 1,3-conjugated dienes, cyclic dienes are also useful as reactants in the formation of the Diels-Alder adducts. Examples of these cyclic dienes are the cyclopentadienes, fulvenes, 1,3-cyclohexadienes, 1,3-cycloheptadienes, 1,3,5-cycloheptatrienes, cyclooctatetraene, and 1,3,5-cyclononatrienes. Various substituted derivatives of these compounds enter into the diene synthesis.

The dienophiles suitable for reacting with the above dienes to form the adducts used as reactants can be represented by the formula

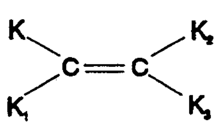

(VI)

wherein the K variables are the same as the R variables in Formula IV above with the proviso that a pair of K's may form an additional carbon-to-carbon bond, i.e., K-C=C-$K_2$, but do not necessarily do so.

A preferred class of dienophiles are those wherein at least one of the K variables is selected from the class of electron-accepting groups such as formyl, cyano, nitro, carboxy, carbohydrocarbyloxy, hydrocarbylcarbonyl, hydrocarbylsulfonyl, carbamyl, acylcarbamyl, N-acyl-N-hydrocarbylcarbamyl, N-hydrocarbylcarbamyl, and N,N-dihydrocarbylcarbamyl. Those K variables which are not electron-accepting groups are hydrogen, hydrocarbyl, or substitutedhydrocarbyl groups. Usually the hydrocarbyl and substituted hydrocarbyl groups will not contain more than 10 carbon atoms each.

The hydrocarbyl groups present as N-hydrocarbyl substituents are preferably alkyl of 1 to 30 carbons and especially 1 to 10 carbons. Representative of this class of dienophiles are the following: nitroalkenes, e.g., 1-nitrobutene-1, 1-nitropentene-1,3-methyl-1-nitrobutene-1,1-nitroheptene-1,1-nitrooctene-1,4-ethoxy-1-nitrobutene-1; alpha, beta-ethylenically unsaturated aliphatic carboxylic acid esters, e.g., alkylacrylates and alpha-methyl alkylacrylates (i.e., alkyl methacrylates) such as butylacrylate and butylmethacrylate, decyl acrylate and decylmethacrylate, di-(n-butyl)-maleate, di-(t-butyl-maleate); acrylonitrile, methacrylonitrile, beta-nitrostyrene, methylvinylsulfone, acrolein, acrylic acid; alpha, beta-ethylenically unsaturated aliphatic carboxylic acid amides, e.g., acrylamide, N,N-dibutylacrylamide, methacrylamide, N-dodecylmethacrylamide, N-pentylcrotonamide; crotonaldehyde, crotonic acid, beta,beta-dimethyldivinylketone, methyl-vinylketone, N-vinyl pyrrolidone, alkenyl halides, and the like.

One preferred class of dienophiles are those wherein at least one, but not more than two of K variables is -C(O)O-$R_o$ where $R_o$ is the residue of a saturated aliphatic alcohol of up to about 40 carbon atoms; e.g., for example at least one K is carbohydrocarbyloxy such as carboethoxy, carbobutoxy, etc., the aliphatic alcohol from which -$R_o$ is derived can be a mono or polyhydric alcohol such as alkyleneglycols, alkanols, aminoalkanols, alkoxysubstituted alkanols, ethanol, ethoxy ethanol, propanol, beta-diethylaminoethanol, dodecyl alcohol, diethylene glycol, tripropylene glycol, tetrabutylene glycol, hexanol, octanol, isooctyl alcohol, and the like. In this especially preferred class of dienophiles, not more than two K variables will be -C(O)-O-$R_o$ groups and the remaining K variables will be hydrogen or lower alkyl, e.g., methyl, ethyl, propyl, isopropyl, and the like.

Specific examples of dienophiles of the type discussed above are those wherein at least one of the K variables is one of the following groups: hydrogen, methyl, ethyl, phenyl, HOOC-, HC(O)-, $CH_2$=CH-, HC≡C-, $CH_3C(O)O$-, $ClCH_2$-, $HOCH_2$-, alpha-pyridyl, -$NO_2$, Cl, Br, propyl, iso-butyl, etc.

In addition to the ethylenically unsaturated dienophiles, there are many useful acetylenically unsaturated dienophiles such as propiolaldehyde, methylethynylketone, propylethynylketone, propenylethynylketone, propiolic acid, propiolic acid nitrile, ethylpropiolate, tetrolic acid, propargylaldehyde, acetylenedicarboxylic acid, the dimethyl ester of acetylenedicarboxylic acid, dibenzoylacetylene, and the like.

Cyclic dienophiles include cyclopentenedione, coumarin, 3-cyanocoumarin, dimethyl maleic anhydride, 3,6-endomethylene-cyclohexenedicarboxylic acid, etc. With the exception of the unsaturated dicarboxylic anhydrides derived from linear dicarboxylic acids (e.g., maleic anhydride, methylmaleic anhydride, chloromaleic anhydride), this class of cyclic dienophiles are limited in commercial usefulness due to their limited availability and other economic considerations.

The reaction products of these dienes and dienophiles correspond to the general formulae

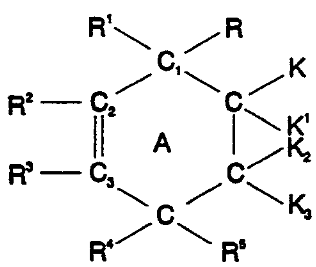

and

(VII)

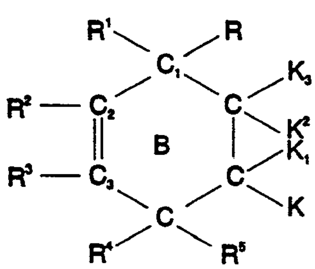

wherein R through $R^5$ and K through $K^3$ are as defined hereinbefore. If the dienophile moiety entering into the reaction is acetylenic rather than ethylenic, two of the K variables, one from each carbon, form another carbon-to-carbon double bond. Where the diene and/or the dienophile is itself cyclic, the adduct obviously will be bicyclic, tricyclic, fused, etc., as exemplified below:

**Reaction 3**

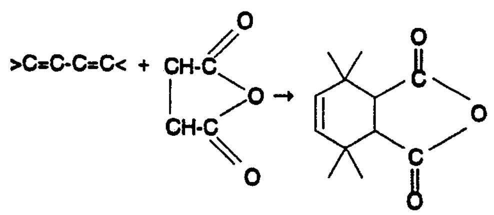

**Reaction 4**

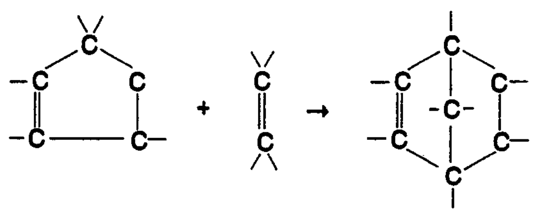

Normally, the adducts involve the reaction of equimolar amounts of diene and dienophile. However, if the dienophile has more than one ethylenic linkage, it is possible for additional diene to react if present in the reaction mixture.

The adducts and processes of preparing the adducts are further exemplified by the following examples.

**Example 1**

A mixture comprising 400 parts of toluene and 66.7 parts of aluminum chloride is charged to a two-liter flask fitted with a stirrer, nitrogen inlet tube, and a solid carbon dioxide-cooled reflux condenser. A second mixture comprising 640 parts (5 moles) of butyl acrylate and 240.8 parts of toluene is added to the $AlCl_3$ slurry while maintaining the temperature within the range of 37 - 58°C over a 0.25-hour period. Thereafter, 313 parts (5.8 moles) of butadiene is added to the slurry over a 2.75-hour period while maintaining the temperature of the reaction mass at 50 - 61°C by means of external cooling. The reaction mass is blown with nitrogen for about 0.33 hour and then transferred to a four-liter separatory funnel and washed with a solution of 150 parts of concentrated hydrochloric acid in 1100 parts of water. Thereafter, the product is subjected to two additional water washings using 1000 parts of water for each wash. The washed reaction product is subsequently distilled to remove unreacted butyl acrylate and toluene. The residue of this first distillation step is subjected to further distillation at a pressure of 9 - 10 millimeters of mercury whereupon 785 parts of the desired product is collected over the temperature of 105 - 115°C.

**Example 2**

The adduct of isoprene and acrylonitrile is prepared by mixing 136 parts of isoprene, 106 parts of acrylonitrile, and 0.5 parts of hydroquinone (polymerization inhibitor) in a rocking autoclave and thereafter heating for 16 hours at a temperature within the range of 130 - 140°C. The autoclave is vented and the contents decanted thereby producing 240 parts of a light yellow liquid. This liquid is stripped at a temperature of 90°C and a pressure of 10 millimeters of mercury thereby yielding the desired liquid product as the residue.

**Example 3**

Using the procedure of Example 2, 136 parts of isoprene, 172 parts of methyl acrylate, and 0.9 part of hydroquinone are converted to the isoprenemethyl acrylate adduct.

**Example 4**

Following the procedure of Example 2, 104 parts of liquified butadiene, 166 parts of methyl acrylate, and 1 part of hydroquinone are charged to the rocking autoclave and heated to 130 - 135°C for 14 hours. The product is subsequently decanted and stripped yielding 237 parts of the adduct.

**Example 5**

The adduct of isoprene and methyl methacrylate is prepared by reacting 745 parts of isoprene with 1095 parts of methyl methacrylate in the presence of 5.4 parts of hydroquinone in the rocking autoclave following the procedure of Example 2 above. 1490 parts of the adduct is recovered.

**Example 6**

The adduct of butadiene and dibutyl maleate (810 parts) is prepared by reacting 915 parts of dibutyl maleate, 216 parts of liquified butadiene, and 3.4 parts of hydroquinone in the rocking autoclave according to the technique of Example 2.

**Example 7**

A reaction mixture comprising 378 parts of butadiene, 778 parts of N-vinylpyrrolidone, and 3.5 parts of hydroquinone is added to a rocking autoclave previously chilled to -35°C. The autoclave is then heated to a temperature of 130 - 140°C for about 15 hours. After venting, decanting, and stripping the reaction mass, 75 parts of the desired adduct are obtained.

**Example 8**

Following the technique of Example 2, 270 parts of liquified butadiene, 1060 parts of isodecyl acrylate, and 4 parts of hydroquinone are reacted in the rocking autoclave at a temperature of 130 - 140°C for about 11 hours. After decanting and stripping, 1136 parts of the adduct are recovered.

**Example 9**

Following the same general procedure of Example 1, 132 parts (2 moles) of cyclopentadiene, 256 parts (2 moles) of butyl acrylate, and 12.8 parts of aluminum chloride are reacted to produce the desired adduct. The butyl acrylate and the aluminum chloride are first added to a two-liter flask fitted with stirrer and reflux condenser. While heating the reaction mass to a temperature within the range of 59 - 52°C, the cyclopentadiene is added to the flask over a 0.5-hour period. Thereafter the reaction mass is heated for about 7.5 hours at a temperature of 95 - 100°C. The product is washed with a solution containing 400 parts of water and 100 parts of concentrated hydrochloric acid and the aqueous layer is discarded. Thereafter, 1500 parts of benzene are added to the reaction mass and the benzene solution is washed with 300 parts of water and the aqueous phase removed. The benzene is removed by distillation and the residue stripped at 0.2 parts of mercury to recover the adduct as a distillate.

**Example 10**

Following the technique of Example 2, the adduct of butadiene and allylchloride is prepared using two moles of each reactant.

**Example 11**

One-hundred thirty-nine parts (1 mole) of the adduct of butadiene and methyl acrylate is transesterified with 158 parts (1 mole) of decyl alcohol. The reactants are added to a reaction flask and 3 parts of sodium methoxide are added. Thereafter, the reaction mixture is heated at a temperature of 190 - 200°C for a period of 7 hours. The reaction mass is washed with a 10 % sodium hydroxide solution and then 250 parts of naphtha is added. The naphtha solution is washed with water. At the completion of the washing, 150 parts of toluene are added and the reaction mass is stripped at 150°C under pressure of 28 parts of mercury. A dark-brown fluid product (225 parts) is recovered. This product is fractionated under reduced pressure resulting in the recovery of 178 parts of the product boiling in the range of 130 - 133°C at a pressure of 0.45 to 0.6 parts of mercury.

**Example 12**

The general procedure of Example 1 is repeated except that only 270 parts (5 moles) of butadiene is included in the reaction mixture.

The sulfur-containing compounds are readily prepared by heating a mixture of a sulfurizing agent such as sulfur, and at least one of the Diels-Alder adducts of the types discussed hereinabove at a temperature within the range of from about 100°C to just below the decomposition temperature of the Diels-Alder adducts. Temperatures within the range of about 100° to about 200°C will normally be used. This reaction results in a mixture of products, some of which have been identified. In the compounds of known structure, the sulfur reacts with the substituted unsaturated cycloaliphatic reactants at a double bond in the nucleus of the unsaturated reactant.

The molar ratio of sulfur to Diels-Alder adduct used in the preparation of the sulfurcontaining composition is from about 0.5 : 1 to about 10 : 1 although the molar ratio generally will be less than about 4 : 1. In one embodiment of the invention, the molar ratio is less than about 1.7 : 1 and more preferably less than about 1 : 1.

The sulfurizing reaction can be conducted in the presence of suitable inert organic solvents such as mineral oils, alkanes of 7 to 18 carbons, etc., although no solvent is generally necessary. After completion of the reaction, the reaction mass can be filtered and/or subjected to other conventional purification techniques. There is no need to separate the various sulfur-containing products as they can be employed in the form of a reaction mixture comprising the compounds of known and unknown structure.

As hydrogen sulfide is an undesirable contaminent, it is advantageous to employ standard procedures for assisting in the removal of the $H_2S$ from the products. Blowing with steam, alcohols, air, or nitrogen gas assists in the removal of $H_2S$ as does heating at reduced pressures with or without the blowing.

It is sometimes advantageous to incorporate materials useful as sulfurization catalysts in the reaction mixture. These materials may be acidic, basic or neutral. Useful neutral and acidic materials include acidified clays such as "Super Filtrol", p-toluenesulfonic acid, dialkylphosphorodithioic acids, phosphorus sulfides such asphosphorus pentasulfide and phosphites such as triaryl phosphites (e.g., triphenyl phosphite).

The basic materials may be inorganic oxides and salts such as sodium hydroxide, calcium oxide and sodium sulfide. The most desirable basic catalysts, however, are nitrogen bases including ammonia and amines. The amines include primary, secondary and tertiary hydrocarbyl amines wherein the hydrocarbyl radicals are alkyl, aryl, aralkyl, alkaryl or the like and contain about 1 - 20 carbon atoms. Suitable amines include aniline, benzylamine, dibenzylamine, dodecylamine, naphthylamine, tallow amines, N-ethyldipropylamine, N-phenylbenzylamine, N,N-diethylbutylamine, m-toluidine and 2,3-xylidine. Also useful are heterocyclic amines such as pyrrolidine, N-methylpyrrolidine, piperidine, pyridine and quinoline.

The preferred basic catalysts include ammonia and primary, secondary, or tertiary alkylamines having about 1 - 8 carbon atoms in the alkyl radicals. Representative amines of this type are methylamine, dimethylamine, trimethylamine, ethylamine, diethylamine, triethylamine, di-n-butylamine, tri-n-butylamine, tri-sec-hexylamine and tri-n-octylamine. Mixtures of these amines can be used, as well as mixtures of ammonia and amines.

When a catalyst is used, the amount is generally about 0.05 - 2.0 % of the weight of the adduct.

The following examples illustrate the preparation of the sulfur-containing compounds derived from Diels-Alder adducts.

**Example B-3**

To 255 parts (1.65 moles) of the isoprenemethacrylate adduct of Example 3 heated to a temperature of 110 - 120°C, there are added 53 parts (1.65 moles) of sulfur flowers over a 45-minute period. The heating is continued for 4.5 hours at a temperature in the range of 130 - 160°C. After cooling to room temperature, the reaction mixture is filtered through a medium sintered glass funnel. The filtrate consists of 301 parts of the desired sulfur-containing products.

**Example B-4**

A reaction mixture comprising 1175 parts (6 moles) of the Diels-Alder adduct of butyl acrylate and isoprene and 192 parts (6 moles) of sulfur flowers is heated for 0.5 hour at 108 - 110°C and then to 155 - 165°C for 6 hours while bubbling nitrogen gas through the reaction mixture at 0.25 to 0.5 standard cubic feet per hour. At the end of the heating period, the reaction mixture is allowed to cool and filtered at room temperature. Thereafter, the product is permitted to stand for 24 hours and refiltered. The filtrate is the desired product.

**Example B-5**

Sulfur (4.5 moles) and the adduct of isoprene-methyl methacrylate (4.5 moles) are mixed at room temperature and heated for one hour at 100°C while blowing nitrogen through the reaction mass at 0.25 - 0.5 standard cubic feet per hour. Subsequently the reaction mixture is raised to a temperature of 150 - 155°C for 6 hours while maintaining the

nitrogen blowing. After heating, the reaction mass is permitted to stand for several hours while cooling to room temperature and is thereafter filtered. The filtrate consists of 842 parts of the desired sulfur-containing product.

**Example B-6**

A one-liter flask fitted with a stirrer, reflux, condenser, and nitrogen inlet line is charged with 256 parts (1 mole) of the adduct of butadiene and isodecyl acrylate, and 51 grams (1.6 moles) of sulfur flowers and then heated for 12 hours at a temperature, stand for 21 hours, and filtered at room temperature to produce the desired product as the filtrate.

**Example B-7**

A mixture of 1703 parts (9.4 moles) of a butyl acrylate-butadiene adduct prepared as in Example 12, 280 parts (8.8 moles) of sulfur and 17 parts of triphenyl phosphite is prepared in a reaction vessel and heated gradually over 2 hours to a temperature of about 185°C while stirring and sweeping with nitrogen. The reaction is exothermic near 160 - 170°C, and the mixture is maintained at about 185°C for 3 hours. The mixture is cooled to 90°C over a period of 2 hours and filtered using a filter aid. The filtrate is the desired product containing 14.0 % sulfur.

**Example B-8**

The procedure of Example B-7 is repeated except that the triphenyl phosphite is omitted from the reaction mixture.

**Example B-9**

The procedure of Example B-7 is repeated except that the triphenyl phosphite is replaced by 2.0 parts of triamyl amine as a sulfurization catalyst.

**Example B-10**

A mixture of 547 parts of a butyl acrylatebutadiene adduct prepared as in Example 12 and 5.5 parts of triphenyl phosphite is prepared in a reaction vessel and heated with stirring to a temperature of about 50°C whereupon 94 parts of sulfur are added over a period of 30 minutes. The mixture is heated to 150°C in 3 hours while sweeping with nitrogen. The mixture then is heated to about 185°C in approximately one hour. The reaction is exothermic and the temperature is maintained at about 185°C by using a cold water jacket for a period of about 5 hours. At this time, the contents of the reaction vessel are cooled to 85°C and 33 parts of mineral oil are added. The mixture is filtered at this temperature, and the filtrate is the desired product wherein the sulfur to adduct ratio is 0.98/1.

**Example B-11**

The general procedure of Example B-10 with the exception that the triphenyl phosphite is not included in the reaction mixture.

**Example B-12**

A mixture of 500 parts (2.7 moles) of a butyl acrylate-butadiene adduct prepared as in Example 12 and 109 parts (3.43 moles) of sulfur is prepared and heated to 180°C and maintained at a temperature of about 180 - 190°C for about 6.5 hours. The mixture is cooled while sweeping with a nitrogen gas to remove hydrogen sulfide odor. The reaction mixture is filtered and the filtrate is the desired product containing 15.8 % sulfur.

**Example B-13**

A mixture of 728 parts (4.0 moles) of a butyl acrylate-butadiene adduct prepared as in Example 12, 218 parts (6.8 moles) of sulfur, and 7 parts of triphenyl phosphite is prepared and heated with stirring to a temperature of about 181°C over a period of 1.3 hours. The mixture is maintained under a nitrogen purge at a temperature of 181 - 187°C for 3 hours. After allowing the material to cool to about 85°C over a period of 1.4 hours, the mixture is filtered using a filter aid, and the filtrate is the desired product containing 23.1 % sulfur.

**Example B-14**

A mixture of 910 parts (5 moles) of a butyl acrylate-butadiene adduct prepared as in Example 12, 208 parts (6.5 moles) of sulfur and 9 parts of triphenyl phosphite is prepared and heated with stirring and nitrogen sweeping to a temperature of about 140°C over 1.3 hours. The heating is continued to raise the temperature to 187°C over 1.5 hours, and the material is held at 183 - 187°C for 3.2 hours. After cooling the mixture to 89°C, the mixture is filtered with a filter aid, and the filtrate is the desired product containing 18.2 % sulfur.

**Example B-15**

A mixture of 910 parts (5 moles) of a butyl acrylate-butadiene adduct prepared as in Example 12, 128 parts (4 moles) of sulfur and 9 parts of triphenyl phosphite is prepared and heated with stirring while sweeping with nitrogen to a temperature of 142°C over a period of about one hour. The heating is continued to raise the temperature to 185 - 186°C over about 2 hours and the mixture is maintained at 185 - 187°C for 3.2 hours. After allowing the reaction mixture to cool to 96°C, the mixture is filtered with filter aid, and the filtrate is the desired product containing 12.0 % sulfur.

**Example B-16**

The general procedure of Example B-15 is repeated except that the mixture contain 259 parts (8.09 moles) of sulfur. The product obtained in this manner contains 21.7 % sulfur.

**Example B-17**

A reaction mixture comprising 1175 grams (6 moles) of the Diels-Alder adduct of butylacrylate and isoprene and 384 grams (12 moles) of sulfur flowers is heated for 0.5 hour at 1.08° - 100°C and then to 155° - 165° for 6 hours while bubbling nitrogen gas through the reaction mixture at 0.25 to 0.5 standard cubic feet per hour. At the end of the heating period, the reaction mixture is allowed to cool and be filtered at room temperature. Thereafter, the product is permitted to stand for 24 hours and refiltered. The filtrate weighing 1278 grams is the desired product.

**Examples B-18 to B-22**

Examples B-18 through B-22 illustrate the preparation of other sulfur-containing compounds useful in the present invention. In each case, the adduct and the sulfur are mixed in a reaction flask and thereafter heated to a temperature within the range of 150 - 160°C for a period of 7 to 10 hours while bubbling nitrogen through the reaction mixture. The sulfurized products are then permitted to cool to room temperature and allowed to stand for several hours. Thereafter the reaction mass is filtered, the filtrate representing the desired sulfur-containing products.

| | Adduct of Example | Molar Ratio of Sulfur to Adduct |
|---|---|---|
| B-18 | 3 | 2 : 1 |
| B-19 | 2 | 2 : 1 |
| B-20 | 10 | 4 : 1 |
| B-21 | 8 | 4 : 1 |
| B-22 | 11 | 5 : 1 |

It has been found that, if these sulfur-containing products are treated with an aqueous solution of sodium sulfide containing from about 5 % to about 75 % by weight $Na_2S$, the treated product may exhibit less of a tendency to darken freshly polished copper metal.

Treatment involves the mixing together of the sulfurized reaction product and the sodium sulfide solution for a period of time sufficient for any unreacted sulfur to be scavenged, usually a period of a few minutes to several hours depending on the amount of unreacted sulfur, the quantity and the concentration of the sodium sulfide solution. The temperature is not critical but normally will be in the range of about 20°C to about 100°C. After the treatment, the resulting aqueous phase is separated from the organic phase by conventional techniques, i.e., decantation, etc. Other alkali metal sulfides, $M_2S_x$ where M is an alkali metal and x is 1, 2, or 3 may be used to scavenge unreacted sulfur but those where x is greater than 1 are not nearly as effective. Sodium sulfide solutions are preferred for reasons of economy and effectiveness. This procedure is described in more detail in U.S. Patent 3 498 915.

It has also been determined that treatment of the reaction products with solid, insoluble acidic materials such as acidified clays or acidic resins and thereafter filtering the sulfurized reaction mass improves the product with

respect to its color and solubility characteristics. Such treatment comprises thoroughly mixing the reaction mixture with from about 0.1 % to about 10 % by weight of the solid acidic material at a temperature of about 25 - 150°C and subsequently filtering the product.

As previously mentioned, there is no need to separate the sulfur-containing products which are produced in the above reactions. The reaction product is a mixture which comprises the compounds whose structures have been ascertained but which also comprises compounds whose structures are unknown. Since it is economically unfeasible to separate the components of the reaction mixture, they are employed in combination as a mixture of sulfur-containing compounds.

In order to remove the last traces of impurities from the reaction mixture, particularly when the adduct employed was prepared using a Lewis acid catalyst, (e.g., $AlCl_3$) it is sometimes desirable to add an organic inert solvent to the liquid reaction product and, after thorough mixing, to refilter the material. Subsequently the solvent is stripped from the product. Suitable solvents include solvents of the type mentioned hereinabove such as benzene, toluene, the higher alkanes, etc. A particularly useful class of solvents are the textile spirits.

In addition, other conventional purification techniques can be advantageously employed in purifying sulfurized products used in this invention. For example, commercial filter aids can be added to the materials prior to filtration to increase the efficiency of the filtration. Filtering through diatomaceous earth is particularly useful where the use contemplated requires the removal of substantially all solid materials. However, such expedients are well known to those skilled in the art and require no elaborate discussion herein.

The sulfurized composition used in the present invention (component (B)) may be at least one sulfurized terpene compound or a composition prepared by sulfurizing a mixture comprising at least one terpene and at least one other olefinic compound.

The term "terpene compound" as used in the specification and claims is intended to include the various isomeric terpene hydrocarbons having the empirical formula $C_{10}H_{16}$, such as contained in turpentine, pine oil and dipentenes, and the various synthetic and naturally occuring oxygen-containing derivatives. Mixtures of these various compounds generally will be utilized, especially when natural products such as pine oil and turpentine are used. Pine oil, for example, which is obtained by destructive distillation of waste pine wood with superheated steam comprises a mixture of terpene derivatives such as alpha-terpineol, beta-terpineol, alpha-fenchol, camphor, borneol/isoborneol, fenchone, estragole, dihydro alphaterpineol, anethole, and other mono-terpene hydrocarbons. The specific ratios and amounts of the various components in a given pine oil will depend upon the particular source and the degree of purification. A group of pine oil-derived products are available commercially from Hercules Incorporated. It has been found that the pine oil products generally known as terpene alcohols available from Hercules Incorporated are particularly useful in the preparation of the sulfurized products used in the invention. Examples of such products include alpha-Terpineol containing about 95 - 97 % of alpha-terpineol, a high purity tertiary terpene alcohol mixture typically containing 96.3 % of tertiary alcohols; Terpineol 318 Prime which is a mixture of isomeric terpineols obtained by dehydration of terpene hydrate and contains about 60 - 65 weight percent of alpha-terpineol and 15 - 20 % beta-terpineol, and 18 - 20 % of other tertiary terpene alcohols. Other mixtures and grades of useful pine oil products also are available from Hercules under such designations as Yarmor 302, Hercó pine oil, Yarmor 302W, Yarmor F and Yarmor 60.

The terpene compounds which can be utilized in the compositions of the present invention may be sulfurized terpene compounds, sulfurized mixtures of terpene compounds or mixtures of at least one terpene compound and atleast one sulfurized terpene compound. Sulfurized terpene compounds can be prepared by sulfurizing terpene compounds with sulfur, sulfur halides, or mixtures of sulfur or sulfur dioxide with hydrogen sulfide as will be described more fully hereinafter. Also, the sulfurization of various terpene compounds has been described in the prior art. For example, the sulfurization of pine oil is described in U.S. Patent 2 012 446.

The other olefinic compound which may be combined with the terpene compound may be any of several olefinic compounds such as those described earlier. For example, the olefins may be of the type illustrated by Formula IV above.

The other olefin used in combination with the terpene also may be an unsaturated fatty acid, an unsaturated fatty acid ester, mixtures thereof, or mixtures thereof with the olefins described above. The term "fatty acid" as used herein refers to acids which may be obtained by hydrolysis of naturally occurring vegetable or animal fats or oils. These fatty acids usually contain from 16 to 20 carbon atoms and are mixtures of saturated and unsaturated fatty acids. The unsaturated fatty acids generally contained in the naturally occurring vegetable or animal fats and oils may contain one or more double bonds and such acids include palmitoleic acid, oleic acid, linoleic acid, linolenic acid, and erucic acid.

The unsaturated fatty acids may comprise mixtures of acids such as those obtained from naturally occurring animal and vegetable oils such as lard oil, tall oil, peanut oil, soybean oil, cottonseed oil, sunflower seed oil, or wheat germ oil. Tall oil is a mixture of rosin acids, mainly abietic acid, and unsaturated fatty acids, mainly oleic and linoleic acids. Tall oil is a by-product of the sulfate process for the manufacture of wood pulp.

The most particularly preferred unsaturated fatty acid esters are the fatty oils, that is, naturally occurring esters of glycerol with the fatty acids described above, and synthetic esters of similar structure. Examples of naturally occurring fats and oils containing unsaturation include animal fats such as Neat's-foot oil, lard oil, depot fat, beef tallow, etc. Examples of naturally occurring vegetable oils include cottonseed oil, corn oil, poppyseed oil, safflower oil, sesame oil, soybean oil, sunflower seed oil and wheat germ oil.

The fatty acid esters which are useful also may be prepared from aliphatic olefinic acids of the type described above such as oleic acid, linoleic acid, linolenic acid, and behenic acid by reaction with alcohols and

polyols. Examples of aliphatic alcohols which may be reacted with the aboveidentified acids include monohydric alcohols such as methanol, ethanol, n-propanol, isopropanol, the butanols, etc.; and polyhydric alcohols including ethylene glycol, propylene glycol, trimethylene glycol, neopentyl glycol, glycerol, etc.

The other olefinic compound utilized with the terpene compound in the preparation of the compositions of the invention includes sulfurized derivatives of said olefinic compounds. Thus, the olefin may be any one or more of the aboveidentified olefinic compound, their sulfurized derivatives, or mixtures of said olefinic compounds and sulfurized derivatives. The sulfurized derivatives can be prepared by methods known in the art utilizing sulfurizing reagents such as sulfur, sulfur halides or mixtures of sulfur or sulfur dioxide with hydrogen sulfide.

The amounts of the terpene compounds and other olefinic compounds contained in the mixture to be sulfurized can vary over a wide range although a sufficient amount of the other olefinic compounds should be contained in the mixture to result in a sulfurized composition having the desired oil-solubility. It has been observed that in some formulations, sulfurized terpenes such as sulfurized pine oil may not exhibit the desired oil solubility characteristics, and it is essential that the mixture to be sulfurized contain enough of the other olefinic compound to result in the formation of a sulfurized composition having the desired oil-solubility. Generally, the equivalent ratio of terpene to other olefin is from about 1 : 20 to about 10 : 1, and more generally will range from about 1 : 10 to about 5 : 1. More preferably, the equivalent ratio of terpene to other olefin will be from about 1 : 10 to about 2 : 1. As mentioned above, the other olefinic compound may be

(i) at least one aliphatic, aryl aliphatic or alicyclic olefinic hydrocarbon containing at least 3 carbon atoms,

(ii) at least one unsaturated fatty acid or unsaturated fatty acid ester,

(iii) at least one sulfurized derivative of (i) or (ii), and

(iv) mixtures thereof. The equivalent ratios of the various olefinic compounds when mixtures are utilized can be varied over a wide range, and the particular equivalent ratios will depend upon the raw materials available as well as the properties desired in the sulfurized composition.

It is frequently advantageous to incorporate materials useful as sulfurization promoters in the reaction mixture. These promoters which may be acidic, basic or neutral have been discussed earlier.

The amount of promoter material used is generally about 0.0005 - 2.0 % of the combined weight of the terpene and olefinic compounds. In the case of the preferred ammonia and amine catalysts, about 0.0005 - 0.5 mole per mole of the combined weight is preferred, and about 0.001 - 0.1 mole is especially desirable.

Water is also present in the reaction mixture either as a promoter or as a diluent for one or more of the promoters recited hereinabove. The amount of water, when present, is usually about 1 - 25 % by weight of the olefinic compound. The presence of water is, however, not essential and when certain types of reaction equipment are used it may be advantageous to conduct the reaction under substantially anhydrous conditions.

When promoters are incorporated into the reaction mixture as described hereinabove, it is generally observed is that the reaction can be conducted at lower temperatures, and the product generally is lighter in color.

The sulfurizing reagent used in this invention may be, for example, sulfur, a sulfur halide such as sulfur monochloride or sulfur dichloride, a mixture of hydrogen sulfide and sulfur or sulfur dioxide, or the like. Sulfur, or mixtures of sulfur and hydrogen sulfide often are preferred. However, it will be understood that other sulfurization reagents may, when appropriate, be substituted therefor. Commercial sources of all the sulfurizing reagents are normally used for the purpose of this invention, and impurities normally associated with these commerical products may be present without adverse results.

When the sulfurization reaction is effected by the use of sulfur alone, the reaction is effected by merely heating the reagents with the sulfur at temperatures of from about 50 to 250°C, usually, from about 150 to about 210°C. The weight ratio of the combination of terpene and other olefin to sulfur is between about 5 : 1 and about 15 : 1, generally between about 5 : 1 and about 10 : 1. The sulfurization reaction is conducted with efficient agitation and generally in an inert atmosphere (e.g., nitrogen). If any of the components or reagents are appreciably volatile at the reaction temperature, the reaction vessel may be sealed and maintained underpressure. It is frequently advantageous to add the sulfur portionwise to the mixture of the other components.

When mixtures of sulfur and hydrogen sulfide are utilized in the process of the invention, the amounts of sulfur and hydrogen sulfide per mole of terpene and other olefin are, respectively, usually about 0.3 to about 3 gram-atoms and about 0.1 to about 1.5 moles. A preferred range is from about 0.5 to about 2.0 gram-atoms and about 0.4 to about 1.25 moles, respectively, and the most desirable ranges are about 0.8 to about 1.8 gram-atoms, and about 0.4 to about 0.8 mole, respectively. In batch operations, the components are introduced at levels to provide these ranges. In semi-continuous operations, they may be admixed at any ratio, but on a mass balance basis, they are present so as to be consumed in amounts within these ratios. Thus, for example, if the reaction vessel is initially charged with sulfur alone, the olefinic compound and hydrogen sulfide are added incrementally at a rate such that the desired ratio is obtained.

When mixtures of sulfur and hydrogen sulfide are utilized in the sulfurization reaction, the temperature range of the sulfurization reaction is generally from about 50 to about 350°C. The preferred range is about 100° to about 200°C with about 120° to about 180°C being especially suitable. The reaction often is conducted under super atmospheric pressure which may be and usually is autogenous pressure (i.e., pressure which naturally developed during the course of the reaction), but may also be externally applied pressure. The exact pressure developed during the reaction is dependent upon such factors as design and operation of the system, the reaction temperature, and the vapor pressure of the reactants and products, and it may vary during the course of the reaction.

While it is preferred generally that the reaction mixture consists entirely of the components and reagents described above, the reaction also may be effected in the presence of an inert solvent (e.g., an alcohol, ether, ester, aliphatic hydrocarbon, halogenated aromatic hydrocarbon, etc.) which is liquid within the temperature range employed. When the reaction temperature is relatively high, for example, at about 200°C, there may be some evolution of sulfur from the product which is avoided is a lower reaction temperature such as from about 150 - 170°C is used.

The time required for the sulfurization reaction to be completed will vary depending the upon the reagents, the ratios thereof, the reaction temperature, the presence or absence of promoters, and the purity of the reagents. When a mixture of sulfur and sulfur dioxide is used as the sulfurizing agent and the reaction is conducted at an elevated pressure in a closed vessel, the course of the reaction can conveniently be followed by monitoring the pressure in the reaction vessel. The reaction generally can be considered complete when the pressure levels off to a constant value. Following the preparation of the sulfurized mixture by the procedures described above, it is generally preferred to remove substantially all low boiling materials, typically by venting the reaction vessel or by distillation at atmospheric pressure, vacuum distillation or stripping, or the passage of an inert gas such as nitrogen through the mixture at a suitable temperature and pressure. Any solids which are present in the reaction mixture may be removed conveniently, in most instances, by merely pouring off the liquid product. If further removal of solids is desired, such conventional techniques as filtration or centrifugation may be used.

In some instances, it may be desirable to treat the sulfurized product obtained in accordance with the procedures described herein to reduce active sulfur.

The following examples illustrate the preparation of sulfurized terpene compounds and sulfurized mixtures of terpenes and olefinic compounds which are useful as component (B) in the present invention.

**Example B-23**

To a reaction vessel there is charged 372 parts (2 equivalents) of a commercially available pine oil (Sargent Welch), and the pine oil is heated and stirred. Sulfur (128 parts) is added slowly with nitrogen blowing while the reaction temperature is maintained at about 35°C. After addition of the sulfur is completed, nitrogen is bubbled through the reaction mixture while it is heated to reflux at about 145°C. After a total reaction time of about 8 hours, the mixture is filtered through filter aid. The filtrate is the desired sulfurized product containing 23.35 % sulfur (theory 25.6).

**Example B-24**

The procedure of Example B-23 is repeated except that the reaction mixture comprises 186 parts of pine oil (1 equivalent) and 32 parts of sulfur (1.0 equivalent). The product obtained in this matter has a sulfur content of 15.6 % (theory 14.68).

**Example B-25**

To a reaction vessel there is added 372 parts (2 equivalents) of pine oil and 96 parts (3 equivalents) of sulfur. When all of the sulfur is added, the mixture is heated to 150°C with nitrogen blowing, and the mixture is maintained at this temperature for about 10 hours. The reaction mixture is filtered through a filter aid, and the filtrate is the desired product having a sulfur content of 17.25 % (theory 20.5).

**Example B-26**

Pine oil (372 parts, 2 equivalents) is added to a reaction vessel, and the pine oil is heated with stirring. Sulfur (190 parts, 6 equivalents) is added slowly to the stirred pine oil, and after addition is completed, nitrogen is blown through the reaction mixture which is heated to a temperature of about 145°C. Triethanol amine (5.62 parts) is added, and heating of the mixture is continued with reflux until the sulfur appears to be dissolved. The mixture is filtered, and the filtrate is the desired product containing 25.4 % sulfur (theory 33.80).

**Example B-27**

A mixture of 111 parts (0.5 mole) of a distilled $C_{16}$ alpha-olefin and 93 parts (0.5 mole) of pine oil is prepared and heated with stirring in a reaction vessel. Sulfur (64 parts, 2 moles) is added slowly, and the reaction temperature is raised to about 170°C. The reaction mixture is maintained at a temperature of 160°C with nitrogen blowing. Some refluxing of the hight ends of the pine oil is observed. The reaction mixture is then cooled and filtered through a filter aid. The filtrate is the desired product containing 25.16 % sulfur (theory 23.9).

**Examples B-28 to B-31**

The general procedure of Example B-27 is repeated except that the equivalent ratio of olefin : pine, oil : sulfur is varied, and in Example B-31, a promoter system consisting of 0.043 equivalent of triethanol amine and 0.01 equivalent of 2,5-bis(tert-octyldithio) thiadiazole are used as promoter for each equivalent of pine oil and the mixture. Further details regarding these examples is found in the following Table I.

**Table I**

| Example | Olefin | Equivalent Ratio Olefin/Pine | % S in Product Oil/S Act/Theory |
|---|---|---|---|
| XXVIII | $C_{16}$ olefin | 1 : 1 : 3 | 19.07/19.09 |
| XXIX | $C_{16}$ olefin | 1 : 1 : 5 | 27.44/28.17 |
| XXX | $C_{16}$ olefin | 1 : 1 : 6 | 28.82/32 |
| XXXI | $C_{16}$ olefin | 1 : 1 : 5 | 24.57/27.77 |

**Example B-32**

A mixture of 186 parts (1 equivalent) of pine oil and 168 parts (1 equivalent) of polypropylene is prepared, and 96 parts (3 equivalents) of sulfur are added with stirring. The reaction mixture is heated to a temperature of about 170°C with nitrogen blowing and maintained at this temperature for 10 hours. The reaction mixture then is cooled and filtered through filter aid. The filtrate is the desired product having a sulfur content of 16.79 % (theory 21.33 %).

**Example B-33**

The mixture of 186 parts of pine oil (1 equivalent), 126 parts of nonene (1 equivalent) and 192 parts (6 equivalents) of sulfur is prepared and heated to reflux at about 135°C for 2 hours. After cooling overnight, 10.1 parts of triethyl amine (0.1 equivalent) and 4.3 parts of 2,5-bis(tert-octyldithio) thiadiazole are added as promoter. The mixture is heated to 135 - 140°C with nitrogen blowing until the reaction mixture becomes clear. The mixture is heated an additional 6 hours at reflux and filtered through a filter aid. The filtrate is the desired product containing 33.49 % sulfur (theory 37.1 %).

**Example B-34**

Polypropylene (252 parts, 1.5 equivalents) is charged to a reaction vessel equipped with a condenser and stirrer. The polypropylene is stirred and 48 parts (1.5 equivalents) of sulfur are added. This reaction mixture is heated to about 170°C and maintained at this temperature for about 5 hours and cooled. Pine oil (279 parts, 1.5 equivalents) is added to the reaction mixture which is then heated to a temperature of about 150°C and maintained at this temperature with nitrogen blowing for about 8 hours. The mixture is cooled and filtered through a filter aid to yield the desired product having a sulfur content of 8.36 % (theory 8.2 %).

The relative amounts of the esters of metaboric acid (component (A)) and the sulfurized organic compound (component (B)) may vary over a wide range depending upon the intended use of the composition. Generally, the weight ratio of sulfur to boron in the mixture is within the range of from about 0.5 : 1 to about 20 : 1. The precise amounts of the two components to be included in the compositions of the invention can be readily determined by one skilled in the art.

The compositions of the present invention may also contain at least one auxiliary corrosion-inhibiting material (component (C)). In one embodiment, corrosion-inhibiting component (C) is at least one dimercaptothiadiazole or oil-soluble derivative thereof. Such materials provide corrosion-inhibiting properties, and particularly, such compositions are useful in inhibiting copper activity such as copper staining.

The dimercaptothiadiazoles which can be utilized in the present invention starting materials for the preparation of oilsoluble derivatives containing the dimercaptothiadiazole nucleus have the following structural formulae and names.

2,5–Dimercapto-1,3,4–thiadiazole

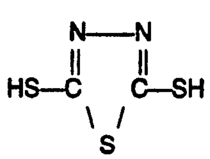

3,5-Dimercapto-1,2,4-thiadiazole

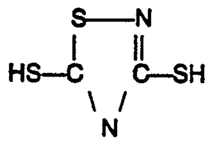

3,4-Dimercapto-1,2,5-thiadiazole

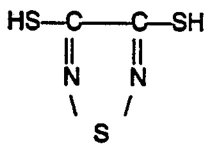

4,5-Dimercapto-1,2,3-thiadiazole

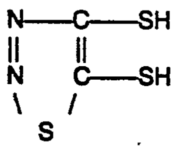

Of these the most readily available, and the one preferred for the purposes of this invention, is 2,5-dimercapto-1,3,4-thiadiazole. This compound will sometimes be referred to hereinafter as DMTD. However, it is to be understood that any of the other dimercaptothiadiazoles may be substituted for all or a portion of the DMTD.

DMTD is conveniently prepared by the reaction of one mole of hydrazine, or a hydrazine salt, with two moles of carbon disulfide in an alkaline medium, followed by acidification.

Derivatives of DMTD have been described in the art, and any such compounds can be included in the compositions of the present invention. The preparation of some derivatives of DMTD is described in E.K. Fields "Industrial and Engineering Chemistry", 49, p. 1361 - 4 (September 1957). For the preparation of the oil-soluble derivatives of DMTD, it is possible to utilize already prepared DMTD or to prepare the DMTD in situ and subsequently adding the material to be reacted with DMTD.

U.S. Patents 2 719 125; 2 719 126; and 3 087 937 describe the preparation of various 2,5-bis-(hydrocarbondithio)-1,3,4-thiadiazoles. The hydrocarbon group may be aliphatic or aromatic, including cyclic, alicyclic, aralkyl, aryl and alkaryl. Such compositions are effective corrosioninhibitors for silver, silver alloys and similar metals. Such polysulfides which can be represented by the following general formula

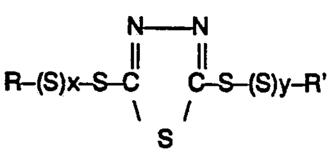 (VIII)

wherein R and R' may be the same or different hydrocarbon groups, and x and y be integers from 0 to about 8, and the sum of x and y being at least 1. A process for preparing such derivatives is described in U.S. Patent 2 191 125 as comprising the reaction of DMTD with a suitable sulfenyl chloride or by reacting the dimercapto diathiazole with chlorine and reacting the resulting disulfenyl chloride with a primary or tertiary mercaptan. Suitable sulfenyl chlorides useful in the first procedure can be obtained by chlorinating a mercaptan (RSH or R'SH) with chlorine in carbon tetrachloride. In a second procedure, DMTD is chlorinated to form the desired bissulfenyl chloride which is then reacted with at least one mercaptan (RSH and/or R'SH). The disclosures of U.S. Patents 2 719 125; 2 719 126; and 3 087 937 are hereby incorporated by reference for their description of derivatives of DMTD useful in the compositions of the invention.

U.S. Patent 3 087 932 describes a one-step process for preparing 2,5-bis-(hydrocarbyldithio)-1,3-4-thiadiazole. The procedure involves the reaction of either DMTD or its alkali metal or ammonium salt and a mercaptan in the presence of hydrogen peroxide and a solvent. Oil-soluble or oil-dispersible reaction products of DMTD can be prepared also by the reaction of the DMTD with a mercaptan and formic acid. Compositions prepared in this manner are described in U.S. Patent 2 749 311. Any mercaptan can be employed in the reaction although aliphatic and aromatic mono- or poly-mercaptan containing from 1 to 30 carbon atoms are preferred. The disclosures of U.S. Patents 3 087 932 and 2 749 311 are hereby incorporated by reference for their description of DMTD derivatives which can be utilized as component (C) of the composition of this invention.

Carboxylic esters of DMTD having the general formula

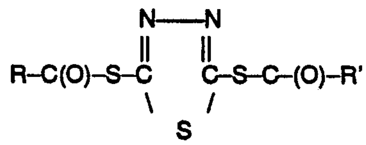 (IX)

wherein R and R' are hydrocarbon groups such as aliphatic, aryl and alkaryl groups containing from about 2 to about 30 or more carbon atoms are described in U.S. Patent 2 760 933. These esters are prepared by reacting DMTD with an organic acid halide (chloride) and a molar ratio of 1 : 2 at a temperature of from about 25 to about 130°C. Suitable solvents such as benzene or dioxane can be utilized to facilitate the reaction. The reaction product is washed with dilute aqueous alkali to remove hydrogen chloride and any unreacted carboxylic acid. The disclosure of U.S. Patent 2 760 933 is hereby incorporated by reference for its description of various DMTD derivatives which can be utilized in the compositions of the present invention.

Condensation products of alpha-halogenated aliphatic monocarboxylic acids having at least 10 carbon atoms with DMTD are described in U.S. Patent 2 836 564. These condensation products generally are characterized by the following formula

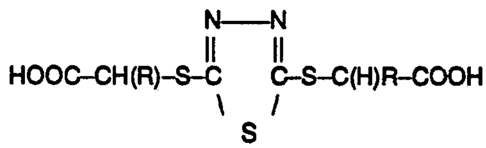 (X)

wherein R is an alkyl group of at least 10 carbon atoms. Examples of alpha-halogenated aliphatic fatty acids which can be used include alpha-bromo-lauric acid, alpha-chloro-lauric acid, alpha-chloro-stearic acid, etc. The disclosure of U.S. Patent 2 836 564 is hereby incorporated by reference for its disclosure of derivatives of DMTD which can be utilized in the compositions of the present invention.

Oil-soluble reaction products of unsaturated cyclic hydrocarbons and unsaturated ketones are described in U.S. Patents 2 764 547 and 2 799 652, respectively, and a disclosure of these references also are hereby incorporated by reference for their description of materials which are useful as component (C) in the compositions of the present invention.

Examples of unsaturated cyclic hydrocarbons described in the '547 patent include styrene, alpha-methyl styrene, pinene, dipentene, cyclopentadiene, etc. The unsaturated ketones described in U.S. Patent 2 799 652 include aliphatic, aromatic or heterocyclic unsaturated ketones containing from about 4 to 40 carbon atoms and from 1 to 6 double bonds. Examples include mesityl oxide, phorone, isophorone, benzal acetophenone, furfural acetone, difurfuryl acetone, etc.

U.S. Patent 2 765 289 describes products obtained by reacting DMTD with an aldehyde and a diaryl amine in molar proportions of from about 1 : 1 : 1 to about 1 : 4 : 4. The resulting products are suggested as having the general formula

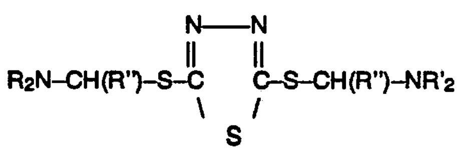 (XI)

wherein R and R' are the same or different aromatic groups, and R" is hydrogen, an alkyl group, or an aromatic group. The aldehydes useful in the preparation of such products as represented by Formula X include aliphatic or aromatic aldehydes containing from 1 to 24 carbon atoms, and specific examples of such aldehydes include formaldehyde, acetaldehyde, benzaldehyde, 2-ethylhexyl aldehyde, etc. The disclosure of this patent also is hereby incorporated by reference for its identification of various materials which can be utilized in the compositions of this invention as component (C).

Component (C) in the compositions of the present invention also may be amine salts of DMTD such as those having the following formula

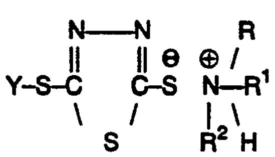 (XII)

in which Y is hydrogen or th ammonium group

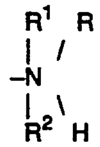

in which R is an aliphatic, aromatic or heterocyclic group, and $R^1$ and $R^2$ are independently aliphatic, aromatic or heterocyclic groups containing from about 6 to about 60 carbon atoms. The amine used in the preparation of the amine salts can be aliphatic or aromatic mono- or polyamines, and the amines may be primary, secondary or tertiary amines. Specific examples of suitable amines include hexylamine, dibutylamine, dodecylamine, ethylenediamine, propylenediamine, tetraethylenepentamine, and mixtures thereof. The disclosure of U.S. Patent 2 910 439 is hereby incorporated by reference for its listing of suitable amine salts.

Dithiocarbamate derivatives of DMTD are described in U.S. Patents 2 690 999 and 2 719 827. Such compositions can be represented by the following formulae

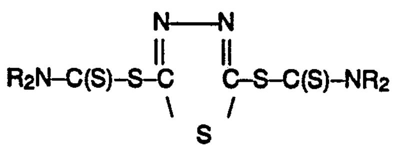

(XIII)

and

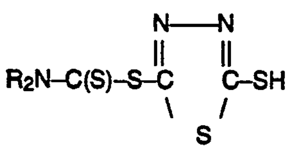

(XIV)

wherein the R groups are straight-chain or branch-chain saturated or unsaturated hydrocarbon groups selected from the group consisting of alkyl, aralkyl and alkaryl groups. The disclosures of these two patents also are hereby incorporated by reference for the identification of various thiadiazyl dithiocarbamates which are useful as component (C) in the compositions of the present invention.

U.S. Patent 2 850 453 describes products which are obtained by reacting DMTD, an aldehyde and an alcohol or an aromatic hydroxy compound in a molar ratio of from 1 : 2 : 1 to 1 : 6 : 5. The aldehyde employed can be an aliphatic aldehyde containing from 1 to 20 carbon atoms or an aromatic or heterocyclic aldehyde containing from about 5 to about 30 carbon atoms. Examples of suitable aldehydes include formaldehyde, acetaldehyde, benzaldehyde. The reaction can be conducted in the presence or absence of suitable solvents by (a) mixing all of the reactants together and heating, (b) by first reacting an aldehyde with the alcohol or the aromatic hydroxy compound, and then reacting the resultant intermediate with the thiadiazole, or (c) by reacting the aldehyde with thiadiazole first and the resulting intermediate with the hydroxy compound. The disclosure of U.S. Patent 2 850 453 is hereby incorporated by reference for its identification of thiadiazole derivatives useful as component (C) in the compositions of the present invention.

U.S. Patent 2 703 784 describes products obtained by reacting DMTD with an aldehyde and a mercaptan. The aldehydes are similar to those disclosed in U.S. Patent 2 850 453, and the mercaptans may be aliphatic or aromatic mono- or poly-mercaptans containing from about 1 to 30 carbon atoms. Examples of suitable mercaptans include ethyl mercaptan, butyl mercaptan, octyl mercaptan, thiophenol, etc. The disclosure of this patent also is incorporated by reference.

The preparation of 2-hydrocarbyldithio-5-mercapto-1,3,4-thiadiazoles having the formula

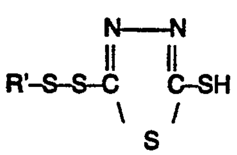

(XV)

wherein R' is a hydrocarbyl substituent is described in U.S. Patent 3 663 561. The compositions are prepared by the oxidative coupling of equomolecular portions of a hydrocarbyl mercaptan and DMTD or its alkali metal mercaptide. The compositions are reported to be excellent sulfur scavengers and are useful in preventing copper corrosion by active sulfur. The mono-mercaptans used in the preparation of the compounds are represented by the formula

R'SH

wherein R' is a hydrocarbyl group containing from 1 to about 280 carbon atoms. A peroxy compound, hypohalide or air, or mixtures thereof can be utilized to promote the oxidative coupling. Specific examples of the mono-mercaptan include

methyl mercaptan, isopropyl mercaptan, hexyl mercaptan, decyl mercaptan, and long chain alkyl mercaptans, for example, mercaptans derived from propene polymers and isobutylene polymers especially polyisobutylenes, having 3 to about 70 propene or isobutylene units per molecule. The disclosure of U.S. Pateant 3 663 561 is hereby incorporated by reference for its identification of DMTD derivatives which are useful as component (C) in the compositions of this invention.

Another material useful as component (C) in the compositions of the present invention is obtained by reacting a thiadiazole, preferably DMTD with an oil-soluble dispersant, preferably a substantially neutral or acidic carboxylic dispersant in a diluent by heating the mixture above about 100°C. This procedure, and the derivatives produced thereby are described in U.S. Patent 4 136 043, the disclosure of which is hereby incorporated by reference. The oilsoluble dispersants which are utilized in the reaction with the thiadiazoles are often identified as "ashless dispersants". Various types of suitable ashless dispersants useful in the reaction are described in the '043 patent.

Another material useful as component (C) in the compositions of the invention is obtained by reacting a thiadiazole, preferably DMTD, with a peroxide, preferably hydrogen peroxide. The resulting nitrogen- and sulfur-containing composition is then reacted with a polysulfide, mercaptan or amino compound (especially oil-soluble, nitrogen-containing dispersants). This procedure and the derivatives produced thereby are described in U.S. Patent 4 246 126, the disclosure of which is incorporated herein by reference.

U.S. Patent 4 140 643 describes nitrogen and sulfur-containing compositions which are oil-soluble and which are prepared by reacting a carboxylic acid or anhydride containing up to about 10 carbon atoms and having at least one olefinic bond with compositions of the type described in U.S. Patent 4 136 043. The preferred carboxylic acid or anhydride is maleic anhydride. The disclosures of U.S. Patents 4 136 043 and 4 140 643 are hereby incorporated by reference for their disclosures of materials useful as component (C) in the compositions of the present invention.

U.S. Patent 4 097 387 describes DMTD derivatives prepared by reacting a sulfur halide with an olefin to form an intermediate which is then reacted with an alkali metal salt of DMTD. More recently, U.S. Patent 4 487 706 describes a DMTD derivated prepared by reacting an olefin, sulfur dichloride and DMTD in a one-step reaction. The olefins generally contain from about 6 to 30 carbon atoms. The disclosures of U.S. Patents 4 097 387 and 4 487 706 are hereby incorporated by reference for their descriptions of oil-soluble DMTD derivatives which are useful as component (C) in the compositions of this invention.

U.S. Patent 4 097 387 describes DMTD derivatives prepared by reacting a sulfur halide with an olefin to form an intermediate which is then reacted with an alkali metal salt of DMTD. More recently, U.S. Patent 4 487 706 describes a DMTD derivated prepared by reacting an olefin, sulfur dichloride and DMTD in a one-step reaction. The olefins generally contain from about 6 to 30 carbon atoms. The disclosures of U.S. Patents 4 097 387 and 4 487 706 are hereby incorporated by reference for their descriptions of oil-soluble DMTD derivatives which are useful as component (C) in the compositions of this invention.

The auxiliary corrosion-inhibitor (C) also may be a polyvalent metal salt of a phosphorus dithioic acid prepared by the reaction of an alcohol and/or a polyhydric alcohol with a phosphorus sulfide. Preferably the alcohols are alkanols such as ethanol butanol, hexanol, octanol, decenol, dodecanol, etc. Group II metal phosphorodithioates are particularly useful and these include zinc dicyclohexylphosphorodithioate, zinc dioctylphosphorodithioate, barium di(heptylphenyl)phosphorodithioate, cadmium dinonylphosphorodithioate, and the zinc salt of a phosphorodithioic acid produced by the reaction of phosphorus pentasulfide with an equimolar mixture of isopropyl alcohol and n-hexyl alcohol. However, when it is desired to formulate compositions containing low amounts of phosphorus, such phosphorodithioate corrosion-inhibitors should be avoided when possible.

Many of the above-mentioned auxiliary corrosion inhibitors also serve as anti-wear agents. Zinc dialkylphosphorodithioates are well known examples.

The amount of the auxiliary corrosion-inhibitor such as the oil-soluble derivatives of dimercaptothiadiazole and metal phosphorodithioates (component (C)) included in the compositions of the present invention may vary over a wide range depending upon the intended end use of the composition. Where the compositions of the present invention are to be utilized in the preparation of lubricating oil formulations, the amount of component (C) included in the composition should be an amount sufficient to provide the desired corrosion-inhibiting properties to the final lubricating oil. Mixtures of auxiliary corrosion-inhibitors such as mixtures of DMTD or derivatives of DMTD and metal phosphorodithioates are useful. Generally the weight ratio of the auxiliary corrosion-inhibitor (C) to the mixture of components (A) and (B) is from about 0.001 : 1 to about 0.5 : 1.

The compositions of the present invention also may contain other materials which are useful in providing additional desirable properties to the composition. Materials which have desirable properties which may be included in the compositions of the invention include, for example, detergents and dispersants of the ash-producing or ashless-type, extreme pressure agents, anti-wear agents, color stabilizers, anti-foam agents, etc.

In one embodiment of the present invention, the compositions of the present invention will contain, in addition to components (A), (B) and (C), at least one oil-soluble dispersant/detergent (component (D)). The dispersant/detergents may be of the ash-producing or the ashless type.

The ash-producing detergents are exemplified by oil-soluble neutral and basic salts of alkali or alkaline earth metals with sulfonic acids or carboxylic acids. The most commonly used salts of such acids are those of sodium, potassium, lithium, calcium, magnesium, strontium and barium.

The term "basic salt" is used to designate metal salts wherein the metal is present in stoichiometrically larger amounts than the organic acid group. The commonly employed methods for preparing the basic salts

involve heating a mineral oil solution of an acid with a stoichiometric excess of a metal neutralizing agent such as the metal oxide, hydroxide, carbonate, bicarbonate, or sulfide at a temperature of about 50°C and filtering the resulting mass. The use of a "promoter" in the neutralization step to aid the incorporation of a large excess of metal likewise is known. Examples of compounds useful as the promoter include phenolic substances such as phenol, naphthol, alkylphenol, thiophenol, sulfurized alkylphenol, and condensation products of formaldehyde with a phenolic substance; alcohols such as methanol, 2-propanol, octyl alcohol, cellosolve, carbitol, ethylene glycol, stearyl alcohol, and cyclohexyl alcohol; and amines such as aniline, phenylenediamine, phenothiazine, phenyl-beta-naphthylamine, and dodecylamine. A particularly effective method for preparing the basic salts comprises mixing an acid with an excess of a basic alkaline earth metal neutralizing agent and at least one alcohol promoter, and carbonating the mixture at an elevated temperature such as 60 - 200°C.

Ashless detergents and dispersants are so called despite the fact that, depending on its constitution, the dispersant may upon combustion yield a non-volatile material such as boric oxide; however, it does not ordinarily contain metal and therefore does not yield a metal-containing ash on combustion. Many types are known in the art, and any of them are suitable for use in the lubricant compositions of this invention. The following are illustrative:

(1) Reaction products of carboxylic acids (or derivatives thereof) containing at least about 34 and preferably at least about 54 carbon atoms with nitrogen containing compounds such as amine, organic hydroxy compounds such as phenols and alcohols, and/or basic inorganic materials. Examples of these "carboxylic dispersants" are described in British Patent 1 306 529 and in many U.S. Patents including the following:

| | | |
|---|---|---|
| 3 163 603 | 3 351 552 | 3 541 012 |
| 3 215 707 | 3 399 141 | 3 542 680 |
| 3 271 310 | 3 433 744 | 3 574 101 |
| 3 281 357 | 3 448 048 | 3 630 904 |
| 3 311 558 | 3 451 933 | 3 632 511 |
| 3 340 281 | 3 467 668 | 3 725 441 |
| 3 346 493 | 3 522 179 | Re 26 433 |

(2) Reaction products of relatively high molecular weight aliphatic or alicyclic halides with amines, preferably polyalkylene polyamines. These may be characterized as "amine dispersants" and examples thereof are described for example, in the following U.S. Patents:

| | |
|---|---|
| 3 275 554 | 3 454 555 |
| 3 438 757 | 3 565 804 |

(3) Reaction products of alkyl phenols in which the alkyl group contains at least about 30 carbon atoms with aldehydes (especially formaldehyde) and amines (especially polyalkylene polyamines), which may be characterized as "Mannich dispersants". The materials described in the following U.S. Patents are illustrative:

| | | |
|---|---|---|
| 2 459 112 | 3 442 808 | 3 591 598 |
| 2 984 550 | 3 454 497 | 3 634 515 |
| 3 166 516 | 3 461 172 | 3 697 574 |
| 3 355 270 | 3 539 633 | 3 725 480 |
| 3 413 347 | 3 586 629 | 3 980 569 |

(4) Products obtained by post-treating the carboxylic, amine or Mannich dispersants with such reagents as urea, thiourea, carbon disulfide, aldehydes, ketones, carboxylic acids, hydrocarbon-substituted succinic anhydrides, nitriles, epoxides, boron compounds, or the like. Exemplary materials of this type are described in the following U.S. Patents:

| | | | |
|---|---|---|---|
| 3 036 003 | 3 282 955 | 3 493 520 | 3 639 242 |
| 3 200 107 | 3 366 569 | 3 513 093 | 3 649 659 |
| 3 254 025 | 3 373 111 | 3 539 633 | 3 697 574 |
| 3 278 550 | 3 442 808 | 3 579 450 | 3 703 536 |
| 3 281 428 | 3 455 832 | 3 600 372 | 3 708 422 |

(5) Interpolymers of oil-solubilizing monomers such as decyl methacrylate, vinyl decyl ether and high molecular weight olefins with monomers containing polar substituents, e.g., aminoalkyl acrylates or acrylamides and poly-(oxyethylene) substituted acrylates. These may be characterized as "polymeric dispersants" and examples thereof are disclosed in the following U.S. Patents:

| | |
|---|---|
| 3 329 658 | 3 666 730 |
| 3 449 250 | 3 687 849 |
| 3 519 565 | 3 702 300 |

The above-noted patents are incorporated by reference herein for their disclosures of ashless dispersants.

When the detergent/dispersant (component (D)) is included in the composition of the invention, the weight ratio of component (D) to the combined weight of (A) and (B) will be in the range of from about 1 : 0.5 to about 1 : 5.

The compositions of the present invention comprising components (A), (B) and (C) and/or (D) are useful in lubricating oil compositions. The compositions of the invention can be added directly to the lubricant. Preferably, however, they are diluted with a substantially inert, normally liquid organic diluent such as mineral oil, naphtha, benzene, toluene or xylene, to form an additive concentrate. These concentrates usually contain from about 20 % to about 90 % by weight of the compositions of this invention and may contain, in addition, one or more other additives known in the art and described below. The remainder of the concentrate is the substantially inert normally liquid diluent.

The compositions of the invention are useful particularly for improving the properties of lubricants containing little or no phosphorus, especially lubricants containing less than 0.1 % and more generally less than about 0.08 % phosphorus. In some instances, the lubricating compositions may contain no phosphorus. Generally, the phosphorus which is present within the lubricating oil compositions of the present invention is in the form of a phosphorodithioate, and more particularly, as Group II metal phosphorodithioates, organic phosphites such as trialkyl phosphites, etc. Lubricating oil compositions containing less than about 0.1 % by weight of phosphorus, and more preferably less than about 0.08 % by weight of phosphorus generally are known in the art as "low phosphorus lubricating oils". In such low phosphorus or no phosphorus lubricants, it is preferred to use a sulfurized Diels-Alder adduct (component (B)) prepared by reacting sulfur with an adduct in a mole ratio of less than 1 : 1. In zero phosphorus oils useful as motor oils, component (D) is preferably an overbased magnesium sulfonate detergent.

The lubricating oil compositions of the present invention comprise a major amount of oil of lubricating viscosity, including natural and synthetic lubricating oils and mixtures thereof, and minor amounts of the boron- and sulfur-containing compositions described above.

Natural oils include animal oils and vegetable oils (e.g., castor oil, lard oil) as well as mineral lubricating oils such as liquid petroleum oils and solvent-treated or acidtreated mineral lubricating oils of the paraffinic, naphthenic or mixed paraffinic-naphthenic types. Oils of lubricating viscosity derived from coal or shale are also useful. Synthetic lubricating oils include hydrocarbon oils and halosubstituted hydrocarbon oils such as polymerized and interpolymerized olefins (e.g., polybutylenes, polypropylenes, propyleneisobutylene copolymers, chlorinated polybutylenes, etc.); poly(1-hexenes), poly(1-octenes), poly(1-decenes), etc. and mixtures thereof; alkylbenzenes (e.g., dodecylbenzenes, tetradecylbenzenes, dinonylbenzenes, di-(2-ethylhexyl-benzenes, etc.); polyphenyls (e.g., biphenyls, terphenyls, alkylated polyphenyls, etc.); alkylated diphenyl ethers and alkylated diphenyl sulfides and the derivatives, analogs and homologs thereof and the like.

Alkylene oxide polymers and interpolymers and derivatives thereof where the terminal hydroxyl groups have been modified by esterification, etherification, etc., constitute another class of known synthetic lubricating oils that can be used. These are exemplified by the oils prepared through polymerization of ethylene oxide or propylene oxide, the alkyl and aryl ethers of these polyoxyalkylene polymers (e.g., methylpolyisopropylene glycol ether having an average molecular weight of about 1000, diphenyl ether of polyethylene glycol having a molecular weight of about 500 - 1000, diethyl ether of polypropylene glycol having a molecular weight of about 1000 - 1500, etc.) or mono- and polycarboxylic esters thereof, for example, the acetic acid esters, mixed $C_{3-8}$ fatty acid esters, or the $C_{13}$Oxo acid diester of tetraethylene glycol.

Another suitable class of synthetic lubricating oils that can be used comprises the esters of dicarboxylic acids (e.g., phthalic acid, succinic acid, alkyl succinic acids, alkenyl succinic acids, maleic acid, azelaic acid, suberic acid, sebacic acid, fumaric acid, adipic acid, linoleic acid dimer, malonic acid, alkyl malonic acids, alkenyl malonic acids, etc.) with a variety of alcohols (e.g., butyl alcohol, hexyl alcohol, dodecyl alcohol, 2-ethylhexyl alcohol, ethylene glycol, diethylene glycol monoether, propylene glycol, etc.) Specific examples of these esters include dibutyl adipate, di(2-ethylhexyl) sebacate, di-n-hexyl fumarate, dioctyl sebacate, diisooctyl azelate, diisodecyl azelate, dioctyl phthalate, didecyl phthalate, dieicosyl sebacate, the 2-ethylhexyl diester of linoleic acid dimer, the complex ester formed by reacting one mole of sebacic acid with two moles of tetraethylene glycol and two moles of 2-ethylhexanoic acid and the like.

Esters useful as synthetic oils also include those made from $C_5$ to $C_{12}$ monocarboxylic acids and polyols and polyol ethers such as neopentyl glycol, trimethylol propane, pentaerythritol, dipentaerythritol, tripentaerythritol, etc.

Silicon-based oils such as the polyalkyl- polyaryl-, polyalkoxy-, or polyaryloxy-siloxane oils and silicate oils comprise another useful class of synthetic lubricants (e.g., tetraethyl silicate, tetraisopropyl silicate, tetra-(2-ethylhexyl)silicate, tetra-(4-methyl-hexyl)silicate, tetra-(p-tert-butylphenyl)silicate, hexyl-(4-methyl-2-pentoxy)disiloxane, poly(methyl)siloxanes, poly(methylphenyl)siloxanes, etc.). Other synthetic lubricating oils include liquid esters of phosphorus-containing acids (e.g., tricresyl phosphate, trioctyl phosphate, diethyl ester of decane phosphonic

acid, etc.), polymeric tetrahydrofurans and the like.

Unrefined, refined and rerefined oils, either natural or synthetic (as well as mixtures of two or more of any of these) of the type disclosed hereinabove can be used in the compositions of the present invention. Unrefined oils are those obtained directly from a natural or synthetic source without further purification treatment. For example, a shale oil obtained directly from retorting operations, a petroleum oil obtained directly from primary distillation or ester oil obtained directly from an esterification process and used without further treatment would be an unrefined oil. Refined oils are similar to the unrefined oils except they have been further treated in one or more purification steps to improve one or more properties. Many such purification techniques are known to those skilled in the art such as solvent extraction, secondary distillation, acid or base extraction, filtration, percolation, etc. Rerefined oils are obtained by processes similar to those used to obtain refined oils applied to refined oils which have been already used in service. Such rerefined oils are also known as reclaimed or reprocessed oils and often are additionally processed by techniques directed to removal of spent additives and oil breakdown products.

The compositions of the present invention will normally be employed in the lubricating composition of the invention in an amount sufficient to provide the desired improvement in properties such as improved oxidation-corrosion-inhibition, anti-wear and/or extreme pressure properties. More generally, this amount will be from about 0.001 % to about 20 % by weight of the particular oil in which they are utilized. The optimum amount to be used in a given lubricant obviously would depend on the other contents of the particular lubricating composition, the operating conditions to which it is to be subjected, and the particular additives employed. In lubricating compositions operated under extremely adverse conditions, such as lubricating compositions for marine diesel engines, the compositions may be present in the lubricant in amounts of up to about 30 % by weight, or more, of the total weight of the lubricating composition.

In one preferred embodiment, the lubricating oil compositions will comprise an oil of lubricating viscosity and components (A), (B) and (C) as described above. Generally, however, component (D) also will be included in the lubricants. The invention also contemplates the use of other additives in the lubricant compositions of this invention. Such additives include, for example, oxidation-inhibiting agents, pour point depressing agents, extreme pressure agents, anti-wear agents, color stabilizers and antifoam agents.

Pour point depressants are a particularly useful type of additive often included in the lubricating oils described herein. The use of such pour point depressants in oil-based compositions to improve low temperature properties of oil-based compositions is well known in the art. See, for example, page 8 of "Lubricant Additives" by C.V. Smalheer and R. Kennedy Smith (Lezius-Hiles Co. publishers, Cleveland, Ohio, 1967).

Examples of useful pour point depressants are polymethyacrylates; polyacrylates; polyacrylamides; condensation products of haloparaffin waxes and aromatic compounds; vinyl carboxylate polymers; and terpolymers of dialkylfumarates, vinyl esters of fatty acids and alkyl vinyl ethers. Pour point depressants useful for the purposes of this invention, techniques for their preparation and their uses are described in U.S. Patents 2 387 501; 2 015 748; 2 655 479; 1 815 022; 2 191 498; 2 666 746; 2 721 877; 2 721 878; and 3 250 715 which are hereby incorporated by reference for their relevant disclosures.

Anti-foam agents are used to reduce or prevent the formation of stable foam. Typical anti-foam agents include silicones or organic polymers. Additional anti-foam compositions are described in "Foam Control Agents", by Henry T. Kerner (Noyes Data Corporation, 1976), pages 125 - 162.

The following are illustrative examples of the compositions of the present invention (including additive concentrates and lubricants). All parts and percentages are by weight of the total composition unless otherwise indicated.

| | Parts by Weight |
|---|---|
| **Example I** | |
| Metaborate ester of Example A | 5 |
| Product of Example B-15 | 0.5 |
| DMTD derivatives of Formula VIII | |
| where x=0 and R and $R^1$ are hexyl groups | 0.2 |
| **Example II** | |
| Metaborate ester of Example A | 5 |
| Product of Example B-1 | 5 |
| DMTD derivative of Formula VIII | |
| where x=0 and $R^1$ and $R^2$ are octyl groups | 0.2 |
| Basic magnesium petroleum sulfonate | 7.5 |
| **Example III** | |
| Metaborate ester of Example A | 5 |
| Product of Example B-15 | 0.5 |
| DMTD derivatives of Formula VIII | |
| where x=0 and R and $R^1$ are hexyl groups | 0.2 |

| | Parts by Weight |
|---|---|
| **Example IV** | |
| Metaborate ester of Example A | 10 |
| Product of Example B-6 | 10 |
| Reaction product of DMTD, formaldehyde and tertiary octyl mercaptan prepared as in Example I of U.S. Patent 2 703 784 | 0.1 |
| **Example V** | |
| Metaborate ester of Example A | 10 |
| Product of Example B-6 | 10 |
| 2-ethyldithia-5-mercapto-1,3,4-thiadiazole prepared in accordance with the procedure of Example I of U.S. Patent 3 663 561 | 0.1 |
| Zinc dioctylphosphorodithioate | 0.1 |
| **Example VI** | |
| Mineral oil | 50 |
| Composition of Example I | 50 |
| **Example VII** | |
| Mineral oil | 70 |
| Composition of Example IV | 30 |
| **Example VIII** | |
| Mineral oil | 94 |
| Composition of Example V | 3 |
| **Example IX** | |
| Mineral oil | 93.5 |
| Metaborate ester of Example A | 3.90 |
| Product of Example B-6 | 2.0 |
| Reaction product of DMTD, formaldehyde and tertiary octyl mercaptan prepared as in Example I of U.S. Patent 2 703 784 | 0.1 |
| Reaction product of alkylene polyamine with polybutenyl (molecular weight of about 1700) succinic anhydride | 1.4 |
| Silicon anti-foam agent | 0.01 |
| **Example X** | |
| Mineral oil | 89.5 |
| Metaborate ester of Example A | 2.0 |
| Product of Example B-5 | 2.0 |
| Reaction product of ethylenepolyamine with polyisobutenyl (molecular weight of about 1000) succinic anhydride | 4.1 |
| Basic magnesium petroleum sulfonate | 1.5 |
| Reaction product of DMTD, formaldehyde and t-octyl mercaptan prepared as in Example I of U.S. Patent 2 703 784 | 0.2 |
| Alkylated arylamine | 0.7 |
| Silicon anti-foam agent | 0.007 |
| **Example XI** | |
| Mineral oil | 90.3 |
| Metaborate ester of Example A | 2.0 |
| Product of Example B-5 | 2.0 |
| Reaction product of ethylene-polyamine with polyisobutenyl (molecular weight of about 1000) succinic anhydride | 4.1 |
| Basic magnesium petroleum sulfonate | 1.5 |
| Zinc dioctylphosphorodithioate | 0.1 |
| Silicon anti-foam agent | 0.007 |

Lubricating oil compositions containing the compositions of the invention as illustrated above exhibit improved corrosion-inhibiting, anti-oxidant, anti-wear and extreme pressure properties. When the lubricating oil composition of this invention contain substantially no phosphorus and a sulfurized Diels-Alder adduct having a molar ratio of sulfur to adduct of less than 1 : 1, the lubricants are particularly useful as gear oils. Lubricating oils containing the compositions of the invention and up to about 0.025 phosphorus are useful as motor oils. The compositions of the invention also are useful in synthetic oil formulations containing up to about 0.085 phosphorus.

**Claims**

1. A lubricating oil composition comprising:
a major amount of an oil of lubricating viscosity and a minor amount of an oil-soluble composition comprising a mixture of:
(A) an ester of metaboric acid having the general formula:

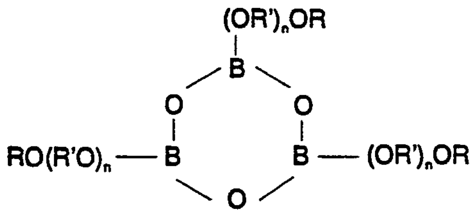

(I)

wherein each
R is independently a hydrogen or hydrocarbyl group containing from 1 to 18 carbon atoms, R in one RO(R'O) group may be hydrogen when n = 0, or two of the R groups are hydrocarbylene groups joined together through a carbon, oxygen or nitrogen atom to form a ring; each
R' is independently an alkylene group containing from 2 to 4 carbon atoms; and
n is from 0 to 7; and
(B) an oil soluble sulfurized organic compound, wherein the amount of (A) and (B) is sufficient to provide a weight ratio of sulfur to boron of from 0.5 : 1 to 20 : 1.

2. A lubricating oil composition as claimed in claim 1 further comprising:
(C) an auxiliary corrosion inhibitor in the form of a zinc phosphorodithioate.

3. A lubricating oil composition as claimed in claim 1 wherein the oil composition contains less than 0.1 % by weight of phosphorus.

4. A lubricating oil composition as claimed in claim 3 wherein the lubricating oil composition contains less than 0.08 % phosphorus.

5. A lubricating oil composition as claimed in any one of claims 1 to 4, wherein the ester of metaboric acid (A) has the general formula:

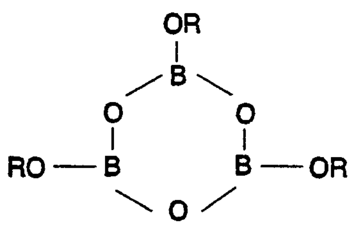

(II)

wherein each R is independently a hydrogen or hydrocarbyl group containing from 3 to 18 carbon atoms.

6. A lubricating oil composition of claim 5 wherein the sulfurized organic compound is a sulfurized Diels-Alder adduct of an aliphatic conjugated diene corresponding to formula V:

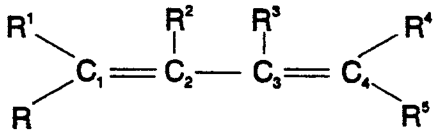

(V)

wherein R to $R^5$ are each independently selected from hydrogen, alkyl, halo, alkoxy, alkenyl, alkenyloxy, carboxy, cyano, amino, alkylamino, dialkylamine, phenyl, and phenyl substituted with one to three substituents corresponding to R to $R^5$, or R, $R^2$, $R^3$ and $R^5$ are as hereinbefore defined and $R^1$ and $R^4$ are alkylene groups joined together to form a cyclic diene.

7. A lubricating oil composition of any preceding claim further comprising:
(D) an oil-soluble dispersant/detergent.

8. A method of preparing a lubricating oil composition comprising admixing a major amount of an oil of lubricating viscosity and a minor amount of an oil-soluble composition comprising a mixture of:
(A) an ester of metaboric acid having the general formula:

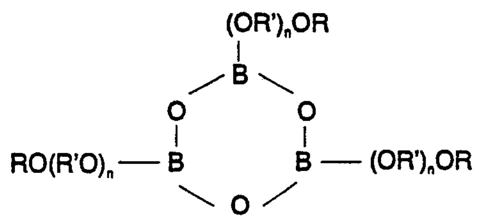

(I)

wherein
each R is independently a hydrogen or hydrocarbyl group containing from 1 to 18 carbon atoms, R in one RO(R'O) group may be hydrogen when n = 0, or two of the R groups are hydrocarbylene groups joined together through a carbon, oxygen or nitrogen atom to form a ring;
each R' is independently an alkylene group containing from 2 to 4 carbon atoms; and
n is from 0 to 7; and
(B) an oil-soluble sulfurized organic compound, wherein the amount of (A) and (B) is sufficient to provide a weight ratio of sulfur to boron of from 0.5 : 1 to 20 : 1.

**Revendications**

1. Une composition d'huile lubrifiante comportant:
une quantité prédominante d'une huile de viscosité lubrifiante et une quantité mineure d'une composition soluble dans l'huile comportant un mélange de:
(A) un ester d'acide métaborique ayant la formule générale:

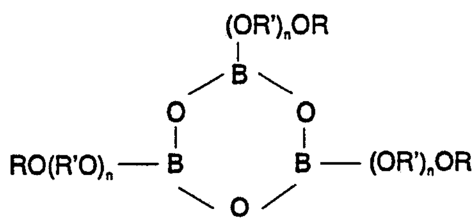

(I)

dans laquelle
chaque R est indépendamment un groupe hydrogène ou hydrocarbyle renfermant de 1 à 18 atomes de carbone, R dans un groupe RO(R'O) peut être de l'hydrogène lorsque n = 0, ou deux des groupes R sont des groupes hydrocarbylènes liés ensemble par l'intermédiaire d'un atome de carbone, d'oxygène ou d'azote pour former un cycle;
chaque R' est indépendamment un groupe alcylène renfermant de 2 à 4 atomes de carbone; et
n est de 0 à 7; et
(B) un composé organique sulfuré, soluble dans l'huile, dans lequel la quantité de (A) et (B) est suffisante pour obtenir un rapport pondéral du soufre au bore de 0,5 : 1 à 20 : 1.

2. Une composition d'huile lubrifiante telle que revendiquée dans la revendication 1, comportant en outre:
(C) un inhibiteur auxiliaire de corrosion sous la forme d'un phosphorodithioate de zinc.

3. Une composition d'huile lubrifiante telle que revendiquée dans la revendication 1, dans laquelle la compostion d'huile contient moins de 0,1 % en poids de phosphore.

4. Une composition d'huile lubrifiante telle que revendiquée dans la revendication 3, dans laquelle la composition d'huile lubrifiante contient moins de 0,08 % de phosphore.

5. Une composition d'huile lubrifiante tel le que revendiquée par l'une quelconque des revendications 1 à 4, dans laquelle l'ester de l'acide métaborique (A) présente la formule générale:

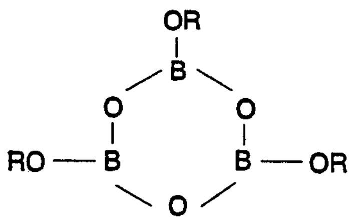

(II)

dans laquelle chaque R est indépendamment un groupe hydrogène ou hydrocarbyle renfermant de 3 à 18 atomes de carbone.

6. Une composition d'huile lubrifiante de la revendication 5 dans laquelle le composé organique sulfuré est un adduct de Diels-Alder d'un diène aliphatique conjugué correspondant à la formule V:

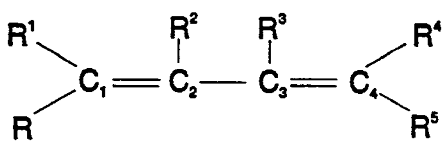

(V)

dans laquelle R à $R^5$ sont chacun indépendamment choisis parmi l'hydrogène, l'alkyle, l'halogène, l'alkoxy, l'alcényle, l'alcényloxy, le carboxy, le cyano, l'amino, l'alkylamino, la dialkylamine, le phényle et le phényle substitué par un à trois substituants correspondant à R à $R^5$, ou R, $R^2$, $R^3$ et $R^5$ sont tels que définis ci-dessus et $R^1$ et $R^4$ sont des groupes alcylène liés ensemble pour former un diène cyclique.

7. Une composition d'huile lubrifiante selon l'une quelconque revendication précédente comportant en outre:
(D) un dispersant/détergent soluble dans l'huile.

8. Une méthode de préparation d'une composition d'huile de lubrification consistant à mélanger une quantité prépondérante d'une huile de viscosité lubrifiante et une quantité mineure d'une composition soluble dans d'huile comportant un mélange de:
(A) un ester d'acide métaborique présentant la formule générale:

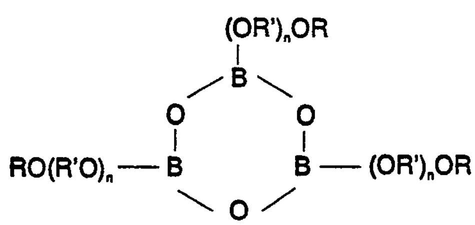

(I)

dans laquelle
R est indépendamment un groupe hydrogène ou hydrocarbyle renfermant de 1 à 18 atomes de carbone, R dans un groupe RO(R'O) peut être de l'hydrogène lorsque n = 0, ou deux des groupes R sont des groupes hydrocarbylène liés ensemble par l'intermédiaire d'un atome de carbone, d'oxygène ou d'azote pour former un cycle;
chaque R' est indépendamment un groupe alcylène renfermant de 2 à 4 atomes de carbone; et
n est de 0 à 7; et
(B) un composé organique sulfuré soluble dans l'huile, dans laquelle la quantité de (A) et (B) est suffisante pour obtenir un rapport pondéral du soufre au bore de 0,5 : 1 à 20 : 1.

## Patentansprüche

1. Schmieröl-Zusammensetzung, umfassend:
eine größere Menge eines Öls mit Schmier-Viskosität und eine kleinere Menge einer öllöslichen Zusammensetzung, umfassend ein Gemisch aus:

(A) einem Ester von Metaborsäure der allgemeinen Formel

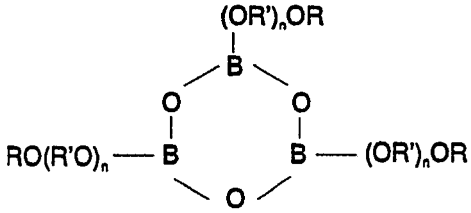

(I)

in der

jedes R unabhängig ein Wasserstoffatom oder einen Kohlenwasserstoffrest mit 1 bis 18 Kohlenstoffatomen bedeutet, R in einem der Reste RO(R'O) ein Wasserstoffatom sein kann, wenn n 0 ist, oder zwei der Reste R zweiwertige Kohlenwasserstoffreste sind, die durch ein Kohlenstoff-, Sauerstoff- oder Stickstoffatom unter Entstehung eines Rings miteinander verbunden sind;

jedes R' unabhängig einen Alkylenrest mit 2 bis 4 Kohlenstoffatomen bedeutet; und

n 0 bis 7 ist; und

(B) einer öllöslichen geschwefelten organischen Verbindung, wobei die Menge an (A) und (B) aus reicht, um ein Gewichtsverhältnis von Schwefel zu Bor von 0,5 : 1 bis 20 : 1 zu ergeben.

2. Schmieröl-Zusammensetzung nach Anspruch 1, umfassend ferner:
(C) einen zusätzlichen Korrosionsinhibitor in Form eines Zink-Phosphordithioates.

3. Schmieröl-Zusammensetzung nach Anspruch 1, in der die Öl-Zusammensetzung weniger als 0,1 Gew.-% Phosphor enthält.

4. Schmieröl-Zusammensetzung nach Anspruch 3, in der die Schmieröl-Zusammensetzung weniger als 0,08 % Phosphor enthält.

5. Schmieröl-Zusammensetzung nach einem der Ansprüche 1 bis 4, in der der Ester der Metaborsäure (A) die allgemeine Formel aufweist:

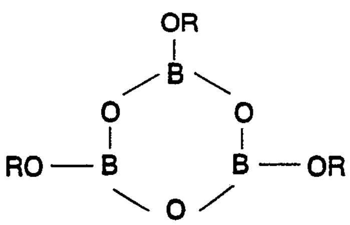

(II)

in der jedes R unabhängig ein Wasserstoffatom oder einen Kohlenwasserstoffrest mit 3 bis 18 Kohlenstoffatomen bedeutet.

6. Schmieröl-Zusammensetzung nach Anspruch 5, in der die geschwefelte organische Verbindung in ein geschwefeltes Diels-Alder-Addukt eines aliphatischen konjugierten Diens der Formel V ist:

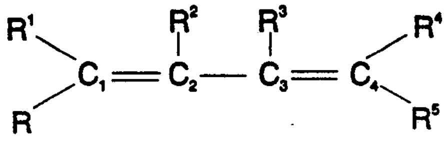

(II)

in der R bis $R^5$ jeweils unabhängig Wasserstoffatome, Alkyl-, Halogen-, Alkoxy-, Alkenyl-, Alkenyloxy-, Carboxy-, Cyano-, Amino-, Alkylamino-, Dialkylamin-, Phenyl- oder mit einem bis drei R bis $R^5$ entsprechenden Substituenten substituierte Phenylreste sind, oder R, $R^2$, $R^3$ und $R^5$ wie vorstehend definiert sind und $R^1$ und $R^4$ Alkylenreste darstellen, die zu einem cyclischen Dien miteinander verbunden sind.

7. Schmieröl-Zusammensetzung nach einem der vorangehenden Ansprüche, umfassend ferner:
(D) ein öllösliches Dispersant/Detergens.

8. Verfahren zur Herstellung einer Schmieröl-Zusammensetzung, umfassend das Vermischen einer größeren Menge

eines Öls mit Schmierviskosität und einer kleineren Menge einer öllöslichen Zusammensetzung, umfassend ein Gemisch aus:

(A) einem Ester von Metaborsäure der allgemeinen Formel

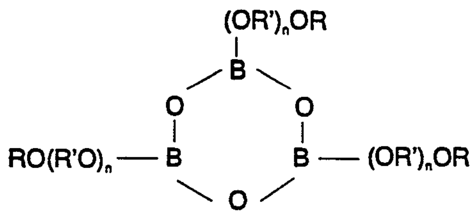

(I)

in der

jedes R unabhängig ein Wasserstoffatom oder einen Kohlenwasserstoffrest mit 1 bis 18 Kohlenstoffatomen bedeutet, R in einem der Reste RO(R'O) ein Wasserstoffatom sein kann, wenn n 0 ist, oder zwei der Reste R zweiwertige Kohlenwasserstoffreste sind, die durch ein Kohlenstoff-, Sauerstoff- oder Stickstoffatom unter Entstehung eines Rings miteinander verbunden sind;

jedes R' unabhängig einen Alkylenrest mit 2 bis 4 Kohlenstoffatomen bedeutet; und

n 0 bis 7 ist; und

(B) einer öllöslichen geschwefelten organischen Verbindung, wobei die Menge an (A) und (B) aus reicht, um ein Gewichtsverhältnis von Schwefel zu Bor von 0,5 : 1 bis 20 : 1 zu ergeben.